# EUROPEAN PATENT SPECIFICATION

(11) **EP 4 264 779 B1**
(45) Date of publication and mention of the grant of the patent: **31.07.2024**
(21) Application number: 21836512.0
(22) Date of filing: 14.12.2021
(51) Int. Cl.: H02J 50/10, H02J 50/60

(54) **FOREIGN OBJECT DETECTION IN A WIRELESS POWER TRANSFER SYSTEM**
FREMDKÖRPERDETEKTION IN EINEM SYSTEM ZUR DRAHTLOSEN STROMÜBERTRAGUNG
DÉTECTION D'OBJET ÉTRANGER DANS UN SYSTÈME DE TRANSMISSION DE PUISSANCE SANS FIL

(30) Priority: 18.12.2020 EP 20215834
(43) Date of publication of application: 25.10.2023
(73) Proprietor: Koninklijke Philips N.V., 5656 AG Eindhoven (NL)
(72) Inventor: LEBENS, Pascal, Leonard, Maria, Theodoor, 5656 AE Eindhoven (NL); ETTES, Wilhelmus, Gerardus, Maria, 5656 AE Eindhoven (NL); LULOFS, Klaas, Jakob, 5656 AE Eindhoven (NL)
(74) Representative: Philips Intellectual Property & Standards
(86) International application number: PCT/EP2021/085598
(87) International publication number: WO 2022/128984

(56) References cited:
- EP-A1- 3 528 364
- WO-A1-2019/057777
- US-A1- 2017 288 412
- US-A1- 2018 366 994
- US-A1- 2019 081 517

## Description

### FIELD OF THE INVENTION

The invention relates to foreign object detection in a wireless power transfer system and in particular, but not exclusively, to foreign object detection for a power transmitter providing inductive power transfer to higher power devices, such as e.g. kitchen appliances.

### BACKGROUND OF THE INVENTION

Most present-day electrical products require a dedicated electrical contact in order to be powered from an external power supply. However, this tends to be impractical and requires the user to physically insert connectors or otherwise establish a physical electrical contact. Typically, power requirements also differ significantly, and currently most devices are provided with their own dedicated power supply resulting in a typical user having a large number of different power supplies with each power supply being dedicated to a specific device. Although, the use of internal batteries may avoid the need for a wired connection to a power supply during use, this only provides a partial solution as the batteries will need recharging (or replacing). The use of batteries may also add substantially to the weight and potentially cost and size of the devices.

In order to provide a significantly improved user experience, it has been proposed to use a wireless power supply wherein power is inductively transferred from a transmitter inductor in a power transmitter device to a receiver coil in the individual devices.

Power transmission via magnetic induction is a well-known concept, mostly applied in transformers having a tight coupling between a primary transmitter inductor/coil and a secondary receiver coil. By separating the primary transmitter coil and the secondary receiver coil between two devices, wireless power transfer between these becomes possible based on the principle of a loosely coupled transformer.

Such an arrangement allows a wireless power transfer to the device without requiring any wires or physical electrical connections to be made. Indeed, it may simply allow a device to be placed adjacent to, or on top of, the transmitter coil in order to be recharged or powered externally. For example, power transmitter devices may be arranged with a horizontal surface on which a device can simply be placed in order to be powered.

Furthermore, such wireless power transfer arrangements may advantageously be designed such that the power transmitter device can be used with a range of power receiver devices. In particular, a wireless power transfer approach, known as the Qi Specifications, has been defined and is currently being further developed. This approach allows power transmitter devices that meet the Qi Specifications to be used with power receiver devices that also meet the Qi Specifications without these having to be from the same manufacturer or having to be dedicated to each other. The Qi standard further includes some functionality for allowing the operation to be adapted to the specific power receiver device (e.g. dependent on the specific power drain).

The Qi Specification is developed by the Wireless Power Consortium and more information can e.g. be found on their website: http://www.wirelesspowerconsortium.com/index.html, where in particular the defined Specification documents can be found.

The Wireless Power Consortium has on the basis of the Qi Specification proceeded to develop the Ki Specification (also known as the Cordless Kitchen Specification) which is aimed at providing safe, reliable, and efficient wireless power transfer to kitchen appliances. Ki supports much higher power levels up to 2.2KW.

A potential problem with wireless power transfer is that power may unintentionally be transferred to e.g. metallic objects that happen to be in the vicinity of the power transmitter. For example, if a foreign object, such as e.g. a coin, key, ring etc., is placed upon the power transmitter platform arranged to receive a power receiver, the magnetic flux generated by the transmitter coil will introduce eddy currents in the metal objects which will cause the objects to heat up. The heat increase may be very significant and may be highly disadvantageous.

In order to reduce the risk of such scenarios arising, it has been proposed to introduce foreign object detection where the power transmitter can detect the presence of a foreign object and reduce the transmit power and/or generate a user alert when a positive detection occurs. For example, the Qi system includes functionality for detecting a foreign object, and for reducing power if a foreign object is detected. Specifically, Qi specification version 1.2.1, section 11 describes various methods of detecting a foreign object.

One method to detect such foreign objects is disclosed in WO2015018868A1. Another example is provided in WO 2012127335 which discloses an approach based on determining unknown power losses. In the approach, both the power receiver and the power transmitter measure their power, and the receiver communicates its measured received power to the power transmitter. When the power transmitter detects a significant difference between the power sent by the transmitter and the power received by the receiver, an unwanted foreign object may potentially be present, and the power transfer may be reduced or aborted for safety reasons. This power loss method requires synchronized accurate power measurements performed by the power transmitter and the power receiver.

For example, in the Qi power transfer standard, the power receiver estimates its received power e.g. by measuring the rectified voltage and current, multiplying them and adding an estimate of the internal power losses in the power receiver (e.g. losses of the rectifier, the receiver coil, metal parts being part of the receiver etc.). The power receiver reports the determined received power to the power transmitter with a minimum rate of e.g. every four seconds.

The power transmitter estimates its transmitted power, e.g. by measuring the DC input voltage and current of the inverter, multiplying them and correcting the result by subtracting an estimation of the internal power losses in the transmitter, such as e.g. the estimated power loss in the inverter, the primary coil, and metal parts that are part of the power transmitter.

The power transmitter can estimate the power loss by subtracting the reported received power from the transmitted power. If the difference exceeds a threshold, the transmitter will assume that too much power is dissipated in a foreign object, and it can then proceed to terminate the power transfer.

Alternatively, it has been proposed to measure the quality or Q-factor of the resonant circuit formed by the primary coil and secondary coil together with the corresponding capacitances and resistances. A reduction in the measured Q-factor may be indicative of a foreign object being present. This approach is often used prior to power transfer.

In practice, it tends to be difficult to achieve sufficient detection accuracy using the methods described in the Qi specification. This difficulty is exacerbated by a number of uncertainties about the specific current operating conditions.

For example, a particular problem is the potential presence of friendly metals (i.e. metal parts of the device that embodies the power receiver or the power transmitter) as the magnetic and electrical properties of these may be unknown (and vary between different devices) and therefore may be difficult to compensate for.

Further, undesirable heating may result from even relatively small amounts of power being dissipated in a metallic foreign object. Therefore, it is necessary to detect even a small power discrepancy between the transmitted and received power, and this may be particularly difficult when the power levels of the power transfer increase.

The Q factor degradation approach may in many scenarios have a better sensitivity for detecting the presence of metal objects. However, it may still not provide sufficient accuracy and e.g. may also suffer from the influence of friendly metal.

The performance of the foreign object detection is subject to the specific operating conditions that are present when the test is actually performed. Further, foreign object detection is typically a very sensitive test where it is desired that relatively small changes caused by the presence of a foreign object is detected in an environment with possibly a large variation of the operating conditions and scenarios for which the test is being performed.

The problems tend to be exacerbated for higher power levels. For higher power levels, the foreign object detection algorithms need to be more accurate to prevent heating of foreign objects above a safe temperature. Indeed, the temperature rise is given by the absolute power level, and thus for higher power level the relative power loss that needs to be detected may be reduced substantially.

Also, for higher power levels, the detection accuracy of the foreign object detection becomes increasingly critical, and thus the requirements for an accurate measurement approach becomes increasingly strict. Indeed, many of the foreign object detection approaches that are suitable for low power usage are unsuitable for detection for higher power transfers.

Current approaches and measurement techniques for foreign object detection tend to be suboptimal and may in some scenarios and examples provide less than optimum performance. In particular, they may result in the presence of foreign objects not being detected, or in false detections of foreign objects when none are present. Further, more accurate approaches tend to be complex and expensive.

Hence, an improved object detection would be advantageous and, in particular, an approach allowing increased flexibility, reduced cost, reduced complexity, improved object detection, fewer false detections and missed detections, backwards compatibility, improved suitability for higher power level transfers, and/or improved performance would be advantageous.

WO 2019/057777 A1 describes a foreign object detection approach using multiple detection coils.

### SUMMARY OF THE INVENTION

Accordingly, the Invention seeks to preferably mitigate, alleviate or eliminate one or more of the above mentioned disadvantages singly or in any combination.

According to an aspect of the invention there is provided a power transmitter for wirelessly providing power to a power receiver via an inductive power transfer signal; the power transmitter comprising: a transmitter coil; a driver for generating a drive signal for the transmitter coil, the driver being arranged to generate the drive signal for the transmitter coil to generate the power transfer signal during at least one power transfer time interval of a repeating time frame and to generate the drive signal for the transmitter coil to generate an electromagnetic test signal during at least one foreign object detection time interval of the repeating time frame; a plurality of sets of balanced detection coils coupled in series, each set of balanced detection coils comprising two symmetric detection coils arranged such that signals induced in the two detection coils by an electromagnetic field generated by the transmitter coil compensate each other; a foreign object detector coupled to plurality of sets of balanced detection coils and arranged to perform foreign object detection during the foreign object detection time interval, the foreign object detector being arranged to detect a foreign object in response to signals from the plurality of sets of balanced detection coils meeting a foreign object detection criterion, the foreign object detection criterion including: a first requirement that a signal from at least one of the plurality of sets of balanced detection coils indicates an imbalance between signals induced in the two detection coils of the at least one of the plurality of sets of balanced detection coils exceeding a first threshold; and a second requirement that a number of signals from the plurality of sets of balanced detection coils indicating an imbalance between signals induced in the two detection coils of the set of balanced detection coils exceeding a second threshold is less than a threshold number, the threshold number being at least two.

The invention may provide improved foreign object detection in many embodiments. In many scenarios and systems, a more accurate foreign object detection may be achieved. The approach may in many embodiments reduce complexity. Specifically, the approach may be particularly suitable for improving foreign object detection in higher power level power transfer systems.

The approach may allow improved accuracy and/or reliability of foreign object detection tests during the power transfer phase. In many embodiments, the approach may reduce uncertainty for the foreign object detection tests thereby improving performance.

The invention may provide improved and/or facilitated foreign object detection in many embodiments and scenarios. The approach may provide a particularly efficient approach for improving detection accuracy when using balanced detection coils.

The approach may in particular in many embodiments and scenarios reduce the risk of false foreign object detections for a foreign object detection approach using balanced detection coils. In many embodiments, the approach may allow a differentiation between imbalances caused by foreign objects and by other events, such as a movement of the power receiver appliance/ device.

The foreign object detection time interval of the repeating time frame may specifically be timed to coincide with/ include, be synchronized with zero crossings of the amplitude of the power transfer signal and/or of a varying (e.g. AC) supply voltage to the output stages of the driver.

In many embodiments, a duration of the foreign object detection time interval is no more than 5%, 10%, or 20% of the duration of the time frame. In many embodiments, the duration of the foreign object detection time interval(s) is no less than 70%, 80%, or 90% of the time frame. A duration of the foreign object detection time interval(s) may in many scenarios not exceed 5msec, 10msec, or 50msec.

The detection coils are balanced in that the detection coils are arranged such that signals induced in the two detection coils by an electromagnetic field generated by the transmitter coil compensate each other. The combined voltage over the two balanced detection coils is lower than the largest of the voltages over each of the two balanced detection coils. The compensation may be an at least partial cancellation of the two signals.

The electromagnetic test signal may also be referred to as a test electromagnetic field and the terms may be considered interchangeable.

The imbalance(s) between signals induced in two detection coils of a set of balanced detection coils may be imbalance(s) between signals induced in the two detection coils by the electromagnetic test signal. The imbalance(s) between signals induced in two detection coils of a set of balanced detection coils may be imbalance(s) between signals induced in the two detection coils by an electromagnetic field generated by the transmitter coil. The sets of balanced detection coils may be undriven. The sets of balanced detection coils may be coupled to provide a net electrical energy output.

The power transmitter may be arranged to not provide electrical power/ energy to the sets of balanced detection coils. The sets of balanced detection coils may be coupled to only receive energy by induction. The only current flowing in the sets of balanced detection coils may be current resulting from induction.

The threshold number may be no more than the number of sets in the plurality of sets of balanced detection coils. In many embodiments, the threshold number may be no more than one less than the number of sets in the plurality of sets of balanced detection coils.

The detection coils/ for as set of balanced detection coils may be coupled in series. For detection coils/ winding being coupled in series the current through the detection coils/ winding may be identical.

In some embodiments, a frequency of the drive signal during the foreign object detection time interval is no lower than 50% higher than a frequency of the drive signal during power transfer time interval.

This may provide improved and/or facilitated foreign object detection in many embodiments. It may in particular provide reduced impact of the loading by a load of the power receiver and be detune e.g. a resonant load. The reduced impact of the load may result in more accurate foreign object detection in many embodiments.

In some embodiments the frequency of the drive signal during the foreign object detection time interval is no less than 100%, or even 200% higher than a frequency of the drive signal during power transfer time interval.

In some embodiments, a voltage amplitude of the drive signal during the foreign object detection time interval is no higher than 50% of a voltage amplitude of the drive signal during power transfer time intervals.

This may provide improved and/or facilitated foreign object detection in many embodiments. It may in particular provide reduced impact of the loading by a load of the power receiver and be detune e.g. a resonant load. The reduced impact of the load may result in more accurate foreign object detection in many embodiments.

In some embodiments, the voltage amplitude of the drive signal during the foreign object detection time interval is no higher than 25% or 10% of a voltage amplitude of the drive signal during power transfer time intervals.

In some embodiments, a voltage amplitude of the drive signal is substantially constant during the foreign object detection time interval.

This may provide improved and/or facilitated foreign object detection in many embodiments.

Each set of balanced detection coils may comprise two detection coils arranged such that signals induced in the two detection coils by an electromagnetic field, and sec generated by the transmitter coil offset/ compensate/ at least partially cancel each other in the signal from the set of balanced detection coils.

A signal from a set of balanced detection coils may specifically be a combined signal of the induced signals from the detection coils of the set of detection coils. The signal may be a combined/ summed voltage (or include such a voltage contribution) of the voltages induced in each of the detection coils. The imbalance between signals induced in the two detection coils for a given set of detection coils may be indicated by a voltage, and specifically a voltage amplitude, and/or phase, of the signal.

In accordance with an optional feature of the invention, the threshold number is no less than three.

This may provide particularly advantageous performance in many embodiments, and may in particular in many embodiments and scenarios provide a clearer differentiation between the likelihoods of the cause for the first requirement being a foreign object or that the power receiver has moved.

In accordance with an optional feature of the invention, the threshold number is equal to a number of sets of balanced detection coils in the plurality of sets of balanced detection coils.

This may provide particularly advantageous performance in many embodiments, and may in particular in many embodiments and scenarios provide a clearer differentiation between the likelihoods of the cause for the first requirement being a foreign object or that the power receiver has moved.

In accordance with an optional feature of the invention, the power transmitter further comprises an adapter for adapting an operating parameter of the power transfer in response to a determination that the second requirement is met.

This may provide particularly advantageous performance in many embodiments and scenarios. The operating parameter may for example be a power control loop parameter (e.g. a loop gain, loop frequency response, or loop time constant), a maximum power limit for the power transfer signal, and/or a current power level for the power transfer signal.

In accordance with an optional feature of the invention, the power transmitter further comprises an adapter for adapting an operating parameter of the foreign object detection in response to a determination that the second requirement is met.

This may provide particularly advantageous performance in many embodiments and scenarios. It may in many embodiments provide improved foreign object detection, and in particular a more accurate foreign object detection with typically fewer false positive detections.

In accordance with an optional feature of the invention, the operating parameter is a parameter of the first requirement.

This may provide particularly advantageous performance in many embodiments and scenarios. It may in many embodiments provide improved foreign object detection, and in particular a more accurate foreign object detection with typically fewer false positive detections. The operating parameter may for example be the first threshold or may e.g. be part of a function/ calculation/ algorithm for determining an imbalance measure that is compared to the threshold from the signal(s) of the set(s) of detection coils.

In accordance with an optional feature of the invention, the operating parameter is a parameter of the second requirement.

This may provide particularly advantageous performance in many embodiments and scenarios. It may in many embodiments provide improved foreign object detection, and in particular a more accurate foreign object detection with typically fewer false positive detections. The operating parameter may for example be the second threshold or may e.g. be part of a function/ calculation/ algorithm for determining an imbalance measure that is compared to the threshold from the signal(s) of the set(s) of detection coils.

In accordance with an optional feature of the invention, the power transmitter further comprises: a receiver arranged to receive data from the power receiver, the data including physical property data for a power receiving device comprising the power receiver; for adapting an operating parameter of the foreign object detection in response to the physical property data.

This may provide particularly advantageous performance in many embodiments and scenarios. It may in many embodiments provide improved foreign object detection, and in particular a more accurate foreign object detection with typically fewer false positive detections. The physical property data may specifically be indicative of an extensive physical property of a device comprising the power receiver. The physical property data may for example be indicative of a size parameter, and/or metal content parameter of the device.

The operating parameter may a parameter of the first requirement. The operating parameter may for example be the first threshold or may e.g. be part of a function/ calculation/ algorithm for determining an imbalance measure that is compared to the threshold from the signal(s) of the set(s) of detection coils.

In accordance with an optional feature of the invention, the operating parameter is a parameter of the second requirement.

This may provide particularly advantageous performance in many embodiments and scenarios. It may in many embodiments provide improved foreign object detection, and in particular a more accurate foreign object detection with typically fewer false positive detections. The operating parameter may for example be the second threshold or may e.g. be part of a function/ calculation/ algorithm for determining an imbalance measure that is compared to the threshold from the signal(s) of the set(s) of detection coils.

In accordance with an optional feature of the invention, the power transmitter further comprises a compensator arranged to compensate the signal from at least one set of balanced detection coils for an imbalance between the signals induced in the two detection coils when no foreign object is present.

This may provide particularly advantageous performance in many embodiments and scenarios, and may in particular in many embodiments provide improved foreign object detection.

The compensator may be arranged to determine a first signal from a first set of balanced detection coils at a time where no foreign object is considered present. It may then determine a compensation signal which when combined with the first signal reduces the first signal. The compensation signal may be combined with the first signal and the combined signal may be used to evaluate the first and second requirements of the foreign object detection criterion for the first set of balanced detections coils.

The compensation signal may be generated such that it results in an offsetting/ at least partially cancelling of the combined voltage from the detection coils of a set of balanced detection coils when no foreign object is present. The compensator may be arranged to adapt/compensate/ change a parameter of the drive signal, the parameter being at least one of a voltage amplitude, and a phase of the drive signal.

In accordance with an optional feature of the invention, the compensator is arranged to initiate an adaption of the compensation in response to the second requirement being met.

This may provide particularly advantageous performance in many embodiments and scenarios, and may in particular in many embodiments provide improved foreign object detection. It may allow improved adaptation to the current conditions and operating scenario.

In accordance with an optional feature of the invention, the compensator is arranged to reduce a power level of the power transfer signal in response to a detection that the compensation requires compensation values meeting a criterion.

In accordance with an optional feature of the invention, the power transmitter further comprises an adapter for adapting an operating parameter of the power transfer in response to imbalances between the signals induced in the two detection coils of the set of balanced detection coils for at least two sets of balanced detection coils of the plurality of sets of balanced detection coils

In accordance with an optional feature of the invention, the power transmitter further comprises a circuit for generating a position change indication in response to a determination that the second requirement is met, the position change indication indicating a change of position of the power receiver.

In accordance with an optional feature of the invention, the foreign object detection criterion includes: a third requirement that the signal from at least one of the plurality of sets of balanced detection coils indicates an imbalance between signals induced in the two detection coils of the at least one of the plurality of sets of balanced detection coils does not exceeding a second threshold; the second threshold being larger than the first threshold.

This may allow improved foreign object detection operation and may specifically allow fewer false positive foreign object detections. In many embodiments, the second threshold may be no less than 2, 3, 5, or ten times the first threshold.

In accordance with another aspect of the invention, there is provided a method of operation for a power transmitter wirelessly providing power to a power receiver via an inductive power transfer signal; the power transmitter comprising: a transmitter coil; a plurality of sets of balanced detection coils coupled in series, each set of balanced detection coils comprising two symmetric detection coils arranged such that signals induced in the two detection coils by an electromagnetic field generated by the transmitter coil compensate each other; the method comprising: generating a drive signal for the transmitter coil to generate the power transfer signal during at least one power transfer time interval of a repeating time frame and to generate the drive signal for the transmitter coil to generate an electromagnetic test signal during at least one foreign object detection time interval of the repeating time frame; a foreign object detector coupled to plurality of sets of balanced detection coils and performing foreign object detection during the foreign object detection time interval, the detection of a foreign object being in response to signals from the plurality of sets of balanced detection coils meeting a foreign object detection criterion, the foreign object detection criterion including: a first requirement that a signal from at least one of the plurality of sets of balanced detection coils indicates an imbalance between signals induced in the two detection coils of the at least one of the plurality of sets of balanced detection coils exceeding a first threshold; and a second requirement that a number of signals from the plurality of sets of balanced detection coils indicating an imbalance between signals induced in the two detection coils of the set of balanced detection coils exceeding a second threshold is less than a threshold number, the threshold number being at least two.

These and other aspects, features and advantages of the invention will be apparent from and elucidated with reference to the embodiment(s) described hereinafter.

### BRIEF DESCRIPTION OF THE DRAWINGS

Embodiments of the invention will be described, by way of example only, with reference to the drawings, in which
Fig. 1 illustrates an example of elements of a power transfer system in accordance with some embodiments of the invention;
Fig. 2 illustrates an example of elements of a power transmitter in accordance with some embodiments of the invention;
Fig. 3 illustrates an example of a half bridge inverter for a power transmitter;
Fig. 4 illustrates an example of a full bridge inverter for a power transmitter;
Fig. 5 illustrates an example of a time frame for the wireless power transfer system of Fig. 1;
Fig. 6 illustrates an example of detection coils for a power transmitter in accordance with some embodiments of the invention;
Fig. 7 illustrates an example of electromagnetic fields and detection coils for a power transmitter in accordance with some embodiments of the invention;
Fig. 8 illustrates an example of a drive signal for a power transmitter in accordance with some embodiments of the invention;
Fig. 9 illustrates an example of a drive signal for a power transmitter in accordance with some embodiments of the invention;
Fig. 10 illustrates an example of elements of a power transmitter in accordance with some embodiments of the invention;
Fig. 11 illustrates an example of detection coils for a power transmitter in accordance with some embodiments of the invention;
Fig. 12 illustrates an example of detection coils for a power transmitter in accordance with some embodiments of the invention;
Fig. 13 illustrates an example of a power receiver device and detection coils for a power transmitter in accordance with some embodiments of the invention;
Fig. 14 illustrates an example of a power receiver device and detection coils for a power transmitter in accordance with some embodiments of the invention; and
Fig. 15 illustrates an example of a power receiver device and detection coils for a power transmitter in accordance with some embodiments of the invention.

### DETAILED DESCRIPTION OF THE EMBODIMENTS

The following description focuses on embodiments of the invention applicable to a wireless power transfer system utilizing a power transfer approach such as known from the Qi specification or the Ki Specification. However, it will be appreciated that the invention is not limited to this application but may be applied to many other wireless power transfer systems.

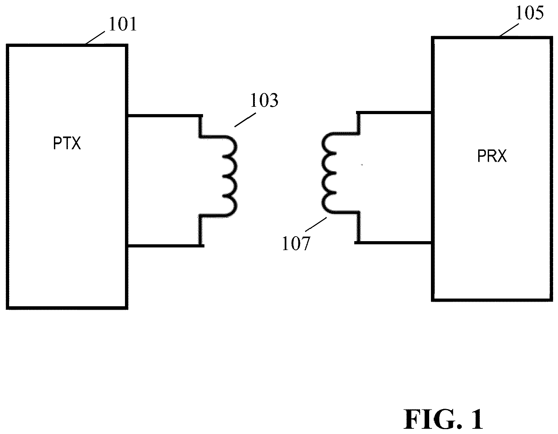

Fig. 1 illustrates an example of a power transfer system in accordance with some embodiments of the invention. The power transfer system comprises a power transmitter 101 which includes (or is coupled to) a transmitter coil / inductor 103. The system further comprises a power receiver 105 which includes (or is coupled to) a receiver coil/ inductor 107.

The system provides an electromagnetic power transfer signal which may inductively transfer power from the power transmitter 101 to the power receiver 105. Specifically, the power transmitter 101 generates an electromagnetic signal, which is propagated as a magnetic flux by the transmitter coil or inductor 103. The power transfer signal may typically have a frequency between around 20 kHz to around 500 kHz, and often for Qi compatible systems typically in the range from 95 kHz to 205 kHz or for Ki compatible systems typically in the range between 20kHz to 80kHz. The transmitter coil 103 and the power receiving coil 107 are loosely coupled and thus the power receiving coil 107 picks up (at least part of) the power transfer signal from the power transmitter 101. Thus, the power is transferred from the power transmitter 101 to the power receiver 105 via a wireless inductive coupling from the transmitter coil 103 to the power receiving coil 107. The term power transfer signal is mainly used to refer to the inductive signal/ magnetic field between the transmitter coil 103 and the power receiving coil 107 (the magnetic flux signal), but it will be appreciated that by equivalence it may also be considered and used as a reference to an electrical signal provided to the transmitter coil 103 or picked up by the power receiving coil 107.

In the example, the power receiver 105 is specifically a power receiver that receives power via the receiver coil 107. However, in other embodiments, the power receiver 105 may comprise a metallic element, such as a metallic heating element, in which case the power transfer signal directly induces eddy currents resulting in a direct heating of the element.

The system is arranged to transfer substantial power levels, and specifically the power transmitter may support power levels in excess of 500mW, 1W, 5W, 50W, 100W or 500W in many embodiments. For example, for Qi corresponding applications, the power transfers may typically be in the 1-5W power range for low power applications (the basic power profile), up to 15W for Qi specification version 1.2, in the range up to 100W for higher power applications such as power tools, laptops, drones, robots etc., and in excess of 100 W and up to more than 2000W for very high power applications, such as e.g. for Ki kitchen applications.

In the following, the operation of the power transmitter 101 and the power receiver 105 will be described with specific reference to an embodiment generally in accordance with the Qi or Ki Specifications (except for the herein described (or consequential) modifications and enhancements) or suitable for the higher power kitchen specification being developed by the Wireless Power Consortium. In particular, the power transmitter 101 and the power receiver 105 may follow, or substantially be compatible with, elements of the Qi Specification version 1.0, 1.1 or 1.2 (except for the herein described (or consequential) modifications and enhancements).

In wireless power transfer systems, the presence of an object (typically a conductive element extracting power from the power transfer signal and not being part of the power transmitter 101 or the power receiver 105, i.e. being an unintended, undesired, and/or interfering element to the power transfer) may be highly disadvantageous during a power transfer. Such an undesired object is in the field known as a foreign object.

A foreign object may not only reduce efficiency by adding a power loss to the operation but may also degrade the power transfer operation itself (e.g. by interfering with the power transfer efficiency or extracting power not directly controlled e.g. by the power transfer loop). In addition, the induction of currents in the foreign object (specifically eddy currents in the metal part of a foreign object) may result in an often highly undesirable heating of the foreign object.

In order to address such scenarios, wireless power transfer systems such as Qi or Ki include functionality for foreign object detection. Specifically, the power transmitter comprises functionality seeking to detect whether a foreign object is present. If so, the power transmitter may e.g. terminate the power transfer or reduce the maximum amount of power that can be transferred.

Foreign object detection may be performed before a power receiver enters the power transfer phase (e.g. during the initialization of the power transfer) or during the power transfer phase. Detection during the power transfer phase is often based on comparisons of measured transmitted power and received power whereas detection that take place before the power transfer phase is often based on measurements of a reflected impedance, e.g. by measuring the quality factor of the transmitter coil by using a small measurement signal.

Current approaches proposed by the Qi Specifications are based on detecting a power loss (by comparing the transmitted and the reported received power) or detecting degradations in the quality Q of the output resonance circuit. However, in current use these approaches have been found to provide suboptimal performance in many scenarios, and they may specifically lead to inaccurate detection resulting in missed detections and/or false positives where a foreign object is detected despite no such object being present.

Conventional foreign object detection tends to be suboptimal, partly due to variations and uncertainties in the specific operating conditions and scenarios in which the foreign object detection is performed, including variations and uncertainties in the power transmitter properties, power receiver properties, test conditions applied etc.

An example of the challenges to foreign object detection tests is the requirement to perform sufficiently accurate measurements in order to achieve a sufficiently reliable foreign object detection. This may lead to a desire to generate as powerful a signal as possible in order to increase the detection accuracy. However, this may increase power consumption in the power receiver and in any foreign object present. The detection performance may be sensitive to the specific signal level applied and there will typically be conflicting requirements.

The system of Fig. 1 uses an approach for foreign object detection that seeks to provide improved trade-offs for foreign object detection. The approach may in many embodiments provide improved foreign object detection and specifically may in many embodiments provide a more accurate and/or reliable foreign object detection. The approach may further allow low complexity and low resource requirements.

As will be described in more detail in the following, the approach utilizes a time division approach during the power transfer phase wherein foreign object detection and power transfer may e.g. be performed in separate time intervals thereby allowing the interference between these (specifically the impact of the power transfer on the foreign object detection) to be reduced substantially.

In the following, the system of Fig. 1 will be described in more detail. In the example, the electromagnetic power transfer signal and the electromagnetic test signal used for the foreign object detection are generated by the same coil. Further, the signals/ fields will be referred to by different terms, namely the electromagnetic signal/ field generated during power transfer time intervals will be referred to as the power transfer signal and the electromagnetic signal/ field generated during foreign object detection time intervals will be referred to as the electromagnetic test signal, or just the test signal.

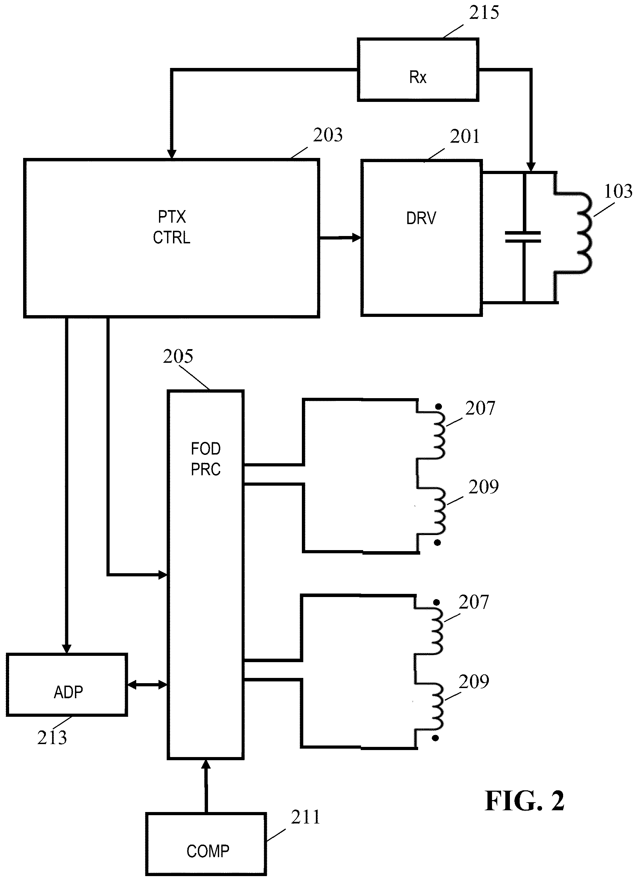

Fig. 2 illustrates elements of the power transmitter 101 of Fig. 1 in more detail.

The power transmitter 101 includes a driver 201 which can generate a drive signal that is fed to the transmitter coil 103 which in return generates the electromagnetic power transfer signal thereby providing a power transfer to the power receiver 105. The power transfer signal is provided during power transfer time intervals of the power transfer phase.

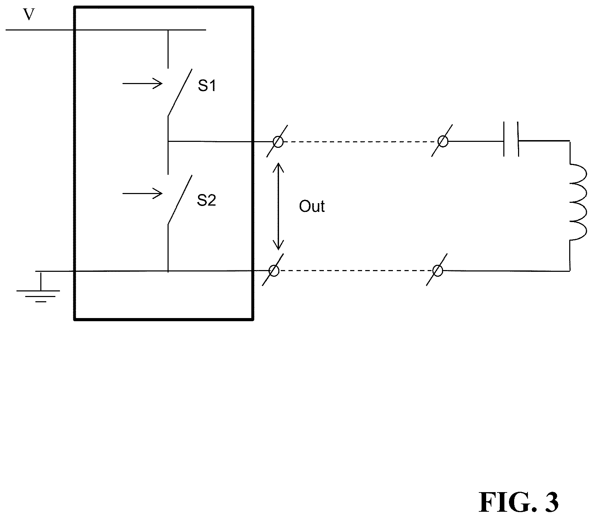

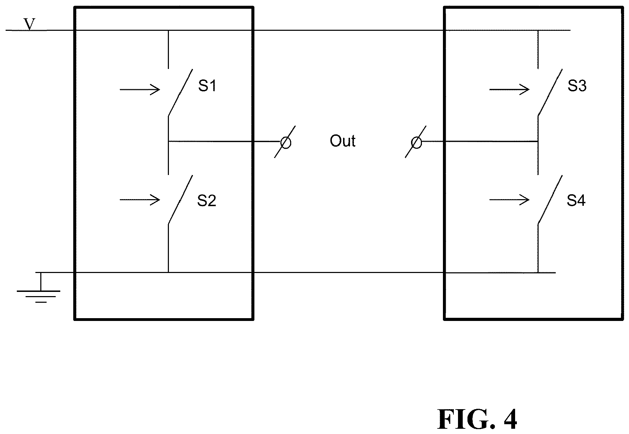

The driver 201 generates the current and voltage which is fed to the transmitter inductor 103. The driver 201 is typically a drive circuit in the form of an inverter which generates an alternating signal from a DC Voltage. The output of the driver 201 is typically a switch bridge generating the drive signal by the appropriate switching of switches of the switch bridge. Fig. 3 shows a half-bridge switch bridge/ inverter. The switches S1 and S2 are controlled such that they are never closed at the same time. Alternatingly S 1 is closed while S2 is open and S2 is closed while S 1 is open. The switches are opened and closed with the desired frequency, thereby generating an alternating signal at the output. Typically, the output of the inverter is connected to the transmitter inductor via a resonance capacitor. Fig. 4 shows a full-bridge switch bridge/ inverter. The switches S1 and S2 are controlled such that they are never closed at the same time. The switches S3 and S4 are controlled such that they are never closed at the same time. Alternatingly switches S1and S4 are closed while S2 and S3 are open, and then S2 and S3 are closed while S 1 and S4 or open, thereby creating a square-wave signal at the output. The switches are opened and closed with the desired frequency.

The power transmitter 101 further comprises a power transmitter controller 203 which is arranged to control the operation of the power transmitter 101 in accordance with the desired operating principles. Specifically, the power transmitter 101 may include many of the functionalities required to perform power control in accordance with the Qi Specifications or the Ki Specification.

The power transmitter controller 203 is in particular arranged to control the generation of the drive signal by the driver 201, and it can specifically control the power level of the drive signal, and accordingly the level of the generated power transfer signal. The power transmitter controller 203 comprises a power loop controller controlling a power level of the power transfer signal in response to the power control messages received from the power receiver 105 during the power control phase.

The system of Fig. 1 uses an approach for foreign object detection that seeks to adapt operation to provide improved trade-offs for foreign object detection. The approach may in many embodiments provide improved foreign object detection and specifically may in many embodiments provide a more accurate and/or reliable foreign object detection. The approach may further allow low complexity and low resource requirements.

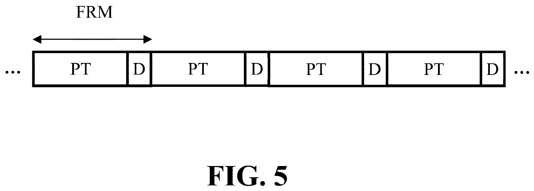

In the example, the driver 201 and the transmitter coil 103 are arranged to generate both an electromagnetic power transfer signal for the purpose of transferring power to a power receiver and an electromagnetic test signal used for foreign object detection. The power transmitter may employ a repeating time frame for the drive signal during the power transfer phase where the time frame comprises at least one power transfer time interval and one foreign object detection time interval. An example of such a repeating time frame is illustrated in Fig. 5 where power transfer time intervals are indicated by PT and foreign object detection time intervals are indicated by D. In the example, each time frame FRM comprises only one foreign object detection time interval and one power transfer time interval and these (as well as the time frame itself) have the same duration in each frame. However, it will be appreciated that in other embodiments, other time intervals may also be included in a time frame (such as e.g. communication intervals) or a plurality of foreign object detection time intervals and/or power transfer time intervals may be included in each time frame. Furthermore, the duration of the different time intervals (and indeed the time frame itself) may in some embodiments vary dynamically.

In the approach, the foreign object detection and the power transfer is thus separated in the time domain thereby resulting in reduced cross-interference from the power transfer to the foreign object detection. Thus, the variability and uncertainty resulting from variations in the operating conditions for the power transfer can be isolated from the foreign object detection resulting in a more reliable and accurate foreign object detection.

In the power transfer phase, the power transmitter is thus arranged to perform power transfer during the power transfer time interval of the time frames. Specifically, during these time intervals, the power transmitter 101 and the power receiver 105 may operate a power control loop (the power control loop may be based on communication within the power transfer time interval or may e.g. be based on communication outside of the power transfer time interval, such as in dedicated communication time intervals. For example, each foreign object time interval may be separated by a plurality of alternating power transfer time intervals and communication time intervals. Thus, the level of the power being transferred may be dynamically varied. In the foreign object detection time intervals of the time frames of the power transfer phase, at least one parameter of the drive signal, and thus of the electromagnetic test signal, is typically set to a predetermined value, or e.g. a value determined during an adaptation operation performed prior to the foreign object detection time interval. Thus, in the foreign object detection time interval, the parameter may be set to a predetermined value (i.e. being determined prior to the foreign object detection time interval, and often prior to the power transfer phase). In contrast, the parameter may not be constrained to this predetermined value during power transfer time intervals.

For example, during a power transfer time interval, the system may operate a power control loop which allows the power level of the power transfer signal to be varied in response to power control messages from the power receiver. The power control loop may control/ change at least one of a current, voltage, and frequency of the drive signal/ power transfer signal. In contrast, during a foreign object detection time interval, the parameter varied by the power control loop during the power transfer time interval may be set to a predetermined value for the current, voltage and/or frequency determined prior to the power transfer phase.

In many embodiments, a constant (typically lower) amplitude (typically voltage) of the drive signal is set during the foreign object detection time intervals. Additionally or alternatively, a predetermined frequency may be set for the drive signal during the foreign object detection time interval and this may typically be substantially higher than the drive signal during the power transfer time intervals.

As a result, the generated electromagnetic signal during the power transfer time intervals, the power transfer signal, typically has substantially different properties than the generated electromagnetic signal during the foreign object detection time intervals, the electromagnetic test signal. The electromagnetic signal or field generated during power transfer time intervals will be referred to as the power transfer signal and the electromagnetic signal or field generated during foreign object detection time intervals will be referred to as the electromagnetic test signal, or just the test signal. However, it will be appreciated that in the system of Fig. 2, the electromagnetic signal is generated from the same coil in both the power transfer time interval and the foreign object detection time interval, and indeed the same driver etc. is used for both the power transfer time interval and the foreign object detection time interval. Indeed, the references to the test signal may in many embodiments be considered equivalent to the power transfer signal during the foreign object detection time interval.

The power transmitter 101 comprises a foreign object detector 205 which is arranged to perform foreign object detection tests, i.e. to specifically detect whether any undesired conductive elements are likely to be present within the generated electromagnetic field.

During an interval in which foreign object detection is performed, i.e. during a foreign object detection time interval, the foreign object detector 205 thus evaluates conditions to determine whether a foreign object is considered present or not. During the foreign object detection time interval, the power transmitter 101 generates an electromagnetic test signal and the foreign object detection is based on evaluating characteristics and properties of this signal.

In the system, the foreign object detection is based on detecting signals induced by the electromagnetic test signal in sets of balanced detection coils which comprises at least two detection coils 207, 209 that are arranged such that they negatively offset each other in the presence of a homogenous magnetic field, and in the presence of an electromagnetic field generated by the transmitter coil 103, such as specifically the electromagnetic test signal. Specifically, the power transmitter comprises a plurality of sets of balanced detection coils which comprises a first detection coil 207 and a second detection coil 209 which are coupled such that electromagnetic field generated by the transmitter coil (at least partially) compensate each other. A set of balanced detection coils will also be referred to as an induction balance.

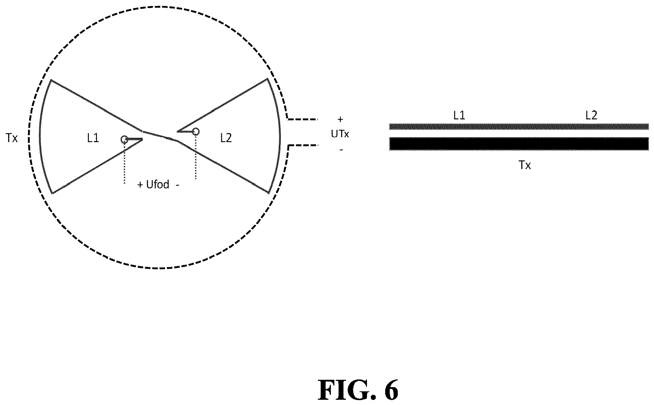

The following will first focus on an operation for a single induction balance, i.e. for a single set of balanced detection coils, such as e.g. illustrated in FIG. 6. For the set of balanced detection coils, the electromagnetic field generated by the transmitter coil 103 will induce a signal in the first detection coil 207 and will induce a signal in the second detection coil 209. However, the induced voltages will have opposite polarity such that the voltage (amplitude) of the series coupling of the detection coils 207, 209 resulting from the electromagnetic field generated by the transmitter coil 103 is lower than the voltage (amplitude) over at least the largest and typically of either of the individual detection coils 207, 209 resulting from the electromagnetic field generated by the transmitter coil 103. Thus, the first detection coil 207 and second detection coil 209 are coupled such that the induced voltages from the electromagnetic field generated by the transmitter coil 103 at least partially cancels each other.

The detection coils are specifically arranged to correspond to at least two windings in which opposing signals are generated by the electromagnetic test signal when no foreign objects are present. The opposing signals may thus at least partially cancel each other and accordingly the level of the measured induced signal across the series coupling of the detection coils 207, 209 will be reduced, and potentially substantially be cancelled. This may allow much increased magnetic field strengths to be used for the foreign object detection. Indeed, in many embodiments and scenarios, the resulting induced voltage may (ideally) be due only to differences in magnetic flux between the windings. Such differences or asymmetry between the windings may be caused by foreign objects and thus a more accurate measurement of the effect of a foreign object on the magnetic field (and thus induced signal) can be achieved in many scenarios.

An example of a detection coil arrangement is shown in Fig. 6. In the example the first detection coil 207 is formed as a first winding L1 and the second detection coil 209 is formed as a second winding L2 coupled in (anti) series such that the combined voltage of the two windings offset each other for a homogenous electromagnetic field. In the example, the detection coils 207, 209 / windings L1, L2 are located opposite and symmetrically around a center point. They are further formed in a plane and the transmitter coil 103 is further formed in the same plane (or at least a substantially parallel plane). In the example, the detection coils 213 are formed inside the transmitter coil 103. Further the detection coils 213 are formed to have substantially the same outline and cover substantially the same area.

As a consequence, the electromagnetic flux through the two detection coils 213 is substantially the same but in opposite directions. As a consequence, the induced voltage in the two detection coils 207, 209 is substantially the same but with the opposite phase/ polarity and the combined voltage over the two series coupled detection coils 213 is cancelled to substantially zero.

Thus the detection coils 207, 209 are arranged such that in the presence of a homogenous field, and/or in the presence of an electromagnetic field generated by the transmitter coil 103 with no other objects present, the induced signals/ voltages at least partially cancels/ compensates each other, ideally resulting in a zero combined voltage.

The arrangement of FIGs. 2 and 6 is such that an induced signal of a first of the two detection coils has an opposite voltage of an induced signal of a second of the two detection coils. The induced signals for the two detection coils have opposite phases for a homogenous field. The induced signals in the two detection coils have opposite phases. The two detection coils are coupled in series and in opposite phase such that the induced signals have opposite polarity. These properties exist for a homogeneous field and for the undistorted field generated by the transmitter coil 103.

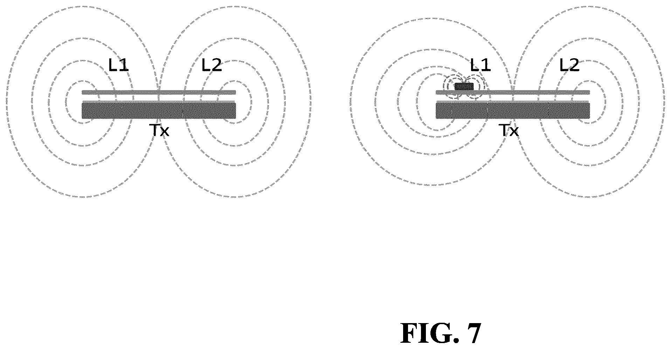

However, in the present of a metallic foreign object, the magnetic field will be distorted typically resulting in an asymmetry between the field for the two detection coils 207, 209. Typically, for a metallic foreign object, the generated electromagnetic test signal will induce eddy currents, which results in the foreign object generating an electromagnetic field such that the combined electromagnetic field is distorted relative to the field of the generated electromagnetic test signal. The resulting asymmetric field will result in different signals being induced in the first detection coil 207 and the second detection coil 209 as indicated by Fig. 7. Thus, in contrast to the situation where no foreign object is present and the flux through the two detection coils 207, 209 is symmetric resulting in a substantially zero combined voltage, the presence of the foreign object results in asymmetry and therefore a resulting voltage. This difference in the induced signal of the two detection coils 207, 209 can be used to detect the presence of the foreign object.

In the system of Fig. 2, the combined voltage of the pair of detection coils 207, 209 can be measured directly and used to perform a foreign object detection. In some embodiments, more complex approaches may be used such as coupling the detection coils in series with a transformer such that the current through the detection coils 207, 209 also flow through the primary winding of the transformer. Thus, the detection coils 207, 209 and the primary winding can be part of a series circuit through which current induced in the detection coils 207, 209 flows. The secondary winding may then be coupled to the foreign object detector 205 and e.g. the current through the second winding can be measured and used as a measurement of the imbalance between the induced signals in the two detection coils 207, 209.

The imbalance indicated by the signal from the induction balance, specifically the output voltage, may be used as an indication that a foreign object is present and specifically if the signal from a set of balanced detection coils meets a criterion, such as e.g. that the absolute value exceeds a detection threshold, this may be considered to indicate that a foreign object may be present.

The approach may thus implement a foreign object detection that utilizes sets of balanced detection coils 207, 209. In the specific example, two detection coils 207, 209 are positioned opposite of each other and in the same magnetic plane as the transmitter coil 103. If such an induction balance is exposed to a symmetrical detection electromagnetic field generated by the transmitter coil 103, the voltage at the terminals of the detection coils 207, 209 is in the ideal theoretical case substantially zero.

If a metal piece is put on one of the sides of the induction balance, as in Fig. 7, the density of the detection electromagnetic test signal/ field is no longer symmetrical and a voltage can be measured at the terminals of the induction balance.

In the approach, a signal is induced in each detection coil with balanced detection coils substantially compensating each other in case of a homogenous field (as typically is the case with no foreign object being present). The output of the detection coils 207, 209 is coupled to the foreign object detector 205. Thus, signals are induced (by the electromagnetic field generated by the transmitter coil) in the detection coils 207, 209 and the resulting (difference) induced signal across the output of the balanced detection coils 207, 209 is fed to foreign object detector 205. The resulting signal is then evaluated by the foreign object detector 205. The signal evaluated by the foreign object detector 205 is thus a representation of the signals induced in the detection coils 207, 209, and specifically is the compensated difference/ sum induced signal.

The foreign object detector may be arranged to detect the foreign object in response to a property of an induced signal from the induction balances meeting a foreign object detection criterion.

As previously mentioned, the power transmitter may be arranged to control the drive signal to exhibit different parameters during the foreign object detection time intervals than during the power transfer time intervals. This may in particular be exploited to reduce the effect and impact of the loading on the electromagnetic test signal by the power receiver.

It has been proposed to disconnect the load of the power receiver during short foreign object detection time intervals, e.g. by the power receiver being implemented with a switch that is actively opened for this purpose. For higher power levels in the kW range, this solution is however not ideal as the disconnection switch introduces additional losses and increases cost. Indeed, in some high power applications, it is simply not feasible to implement such switching, such as for example where the load is an induction-heated metallic element in which eddy currents are directly induced by the power transfer signal to cause heating.

The adaptation of parameters for the drive signals during the foreign object detection time interval relative to the power transfer time interval may address this and may be used to mitigate the effect of the load of the power receiver on the foreign object detection.

In many embodiments, the driver 201 is arranged to increase the frequency of the drive signal during the foreign object detection time intervals compared to during the power transfer time intervals, and specifically is arranged to set the drive signal frequency to be no less than 50% higher than the frequency of the drive signal during power transfer time interval. The driver 201 may accordingly generate the electromagnetic test signal to have a substantially higher frequency than the power transfer signal.

In many scenarios, increasing the frequency substantially may improve detection and reduce the impact of the power receiver load. For example, the power transmitter and power receiver may both have resonance circuits formed for the power transfer, e.g. the transmitter coil 103 and the receiver coil 107 may both be part of resonance circuits, e.g. with a resonance frequency of fres = 25 kHz. Increasing the drive frequency during the foreign object detection time interval (e.g. to 50 kHz) will result in the power transmitter resonance circuit operating in an inductive mode resulting in a reduced current in the transmitter coil 103. Furthermore, the receiver coil current is also reduced because the system is no longer tuned. This will further reduce the power transmitter current. The overall effect will correspond to the effect that would result from a partly disconnected load.
In many embodiments, the driver 201 may be arranged to reduce the voltage of the drive signal during the foreign object detection time intervals relative to the power transfer time interval, and specifically may set the voltage amplitude of the drive signal during the foreign object detection time intervals to be no higher than 50% (or often 25 or even 10%) of the voltage amplitude of the drive signal during the power transfer time intervals.

The reduced voltage may generate an electromagnetic test signal that has reduced intensity, and thus the electromagnetic field generated during the foreign object detection time intervals is lower than during the power transfer time interval and the loading by the load may be reduced correspondingly. This may in many scenarios allow improved detection. In some embodiments, the reduced voltage may be an advantage as it may result in a disconnection of the power receiver load. For example, if the voltage is reduced to a certain level, a power receiver including a rectifier and a battery will be driven by the battery as the induced voltage does not become sufficient for the rectifiers to conduct. This will effectively disconnect the load from the electromagnetic test signal which may improve foreign object detection performance.

In many embodiments, the driver 201 may be arranged to set the voltage amplitude of the drive signal to be constant during the foreign object detection time intervals. This may result in a more homogenous electromagnetic test signal being generated which may improve foreign object detection based on balanced detection coils 207, 209. For example, if the voltage amplitude is time varying, the detection signal will vary and unless this variation can be compensated for, or taken into account, the detection accuracy will be reduced.

In many embodiments, the driver 201 may be arranged to generate the drive signal to during the foreign object detection time interval have a voltage amplitude which is constant and at least 50% lower, and a frequency at least 50% higher, than the drive signal during the power transfer time interval.

As an example, during the power transfer time interval, the drive signal is generated with a first operating frequency close to the resonance frequency of both the power transmitter and the power receiver in order to transmit wireless power with high efficiency.

During the foreign object detection time interval, a first operating frequency of the drive signal is moved away from the resonance frequency of both the power transmitter and the power receiver, to a second higher operating frequency. This second higher operating frequency of the drive signal may be fixed at a predetermined value which is at least a factor of 1.5 higher than the first operating frequency, i.e. the frequency of the power transfer signal.

In addition, the drive signal voltage Uinv is changed to a second amplitude (e.g. provided by a different voltage source) which is constant and lower than during the power transfer time interval.

With the drive signal having the second higher operating frequency and the second lower and constant voltage amplitude, the current through the transmitter coil 103 coil is strongly reduced and kept constant. Furthermore, because the driver current is lagging the driver signal voltage, switching noise is strongly reduced because the inverter at the output of the driver 201 operates in a zero voltage switching scenario.

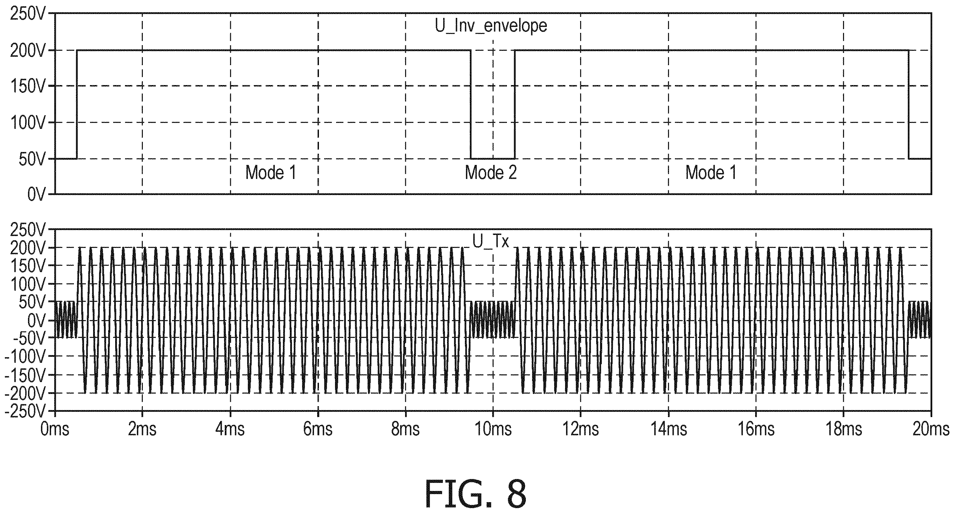

An example of the drive signal amplitude for such a scenario, is shown in Fig. 8 where the operation during power transfer time interval is referred to as Mode 1 and the operation during foreign object detection time interval is referred to as Mode 2. In this example, the voltage amplitude is also constant during the power transfer time interval, e.g. due to the inverter being supplied by a constant voltage source.

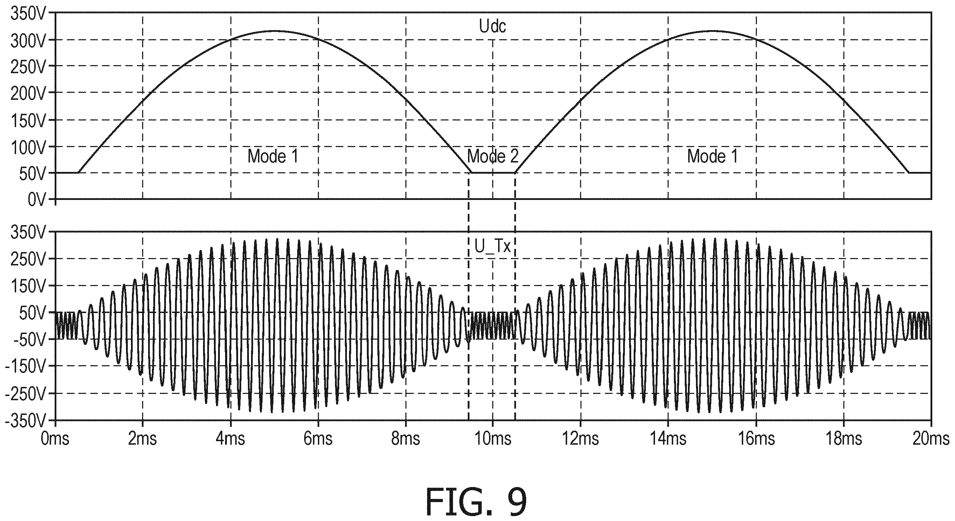

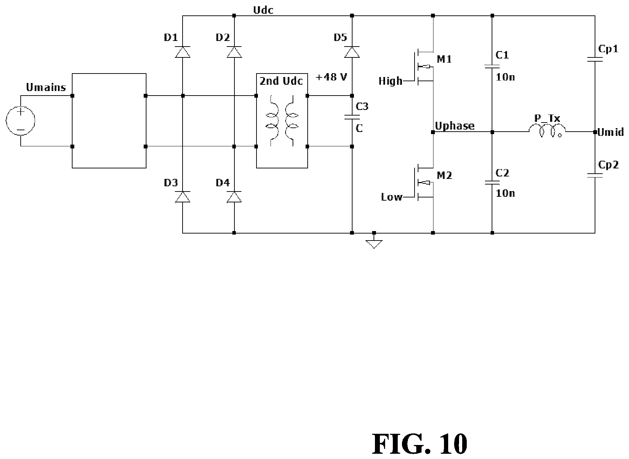

Fig. 9 illustrates a corresponding example where the voltage amplitude is varied during the power transfer time interval. This may for example be achieved by the inverter being supplied by a voltage which is a rectified (but not smoothed) AC voltage. The supply voltage during foreign object detection time intervals, which may be synchronized with the zero crossings of the AC signal, is provided through an alternative power supply which provides a substantially constant voltage. An example of a circuit that may generate such a drive signal is illustrated in Fig. 10. In the circuit, the output inverter circuit (M1, M2, Cp1, Cp2) is driven by a rectified AC mains voltage, except when the rectified voltage falls below a given voltage (in the example 48V) of a smoothing capacitor C3 fed by a second supply circuit (2^{nd} Udc). During this time, the inverter circuit is supplied by the smoothing capacitor C3 via D5 resulting in a substantially constant supply voltage and consequently constant drive signal voltage amplitude.

In such examples, the transmitter coil 103 generates an electromagnetic test signal corresponding to a substantially constant electromagnetic field for foreign object detection during the foreign object detection time interval with the electromagnetic test signal having the predetermined higher second operating frequency. The amplitude of the foreign object detection electromagnetic field/ electromagnetic test signal is mainly determined by the second lower output voltage of the driver 201. In this case, a non-disconnected load of a power receiver is effectively detuned from the power transmitter and therefore it has a reduced impact on the electromagnetic field/ electromagnetic test signal.

In the specific system described, the power transmitter comprises a plurality of induction balances, i.e. a plurality of sets of balanced detection coils, and the foreign object detection is performed based on the output signals from two or more of these sets of balanced detection coils. Typically, the foreign object detection is based on a criterion that considers the signals from all of the sets of balanced detection coils.

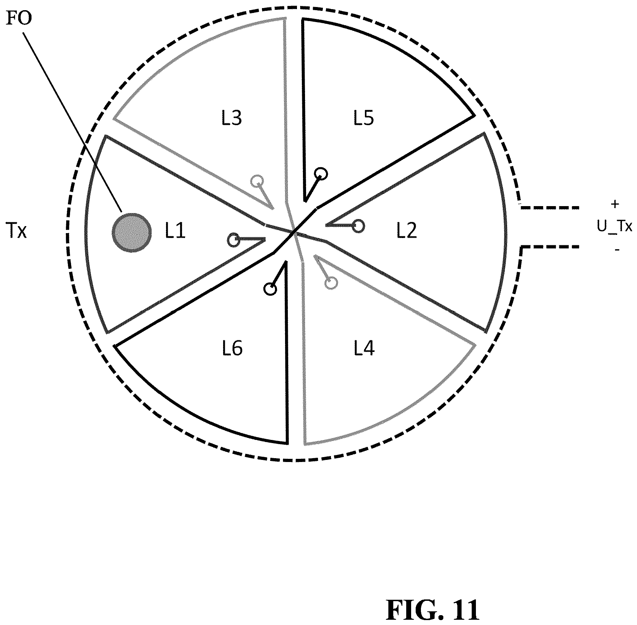

For example, as illustrated in Fig. 11, the power transmitter may be generated to include three sets of balanced detection coils with each set comprising two wedge shaped coils. In this example, the foreign object detection may measure the output signal from each of the three balanced detection coil pairs and use these signals to perform a foreign object detection. The exact criterion used will depend on the preferences and requirements of the individual embodiment and will be described in more detail later.

In many embodiments, as indeed in the example of Fig. 11, the balanced detection coils are located within the transmitter coil 103. This may typically provide improved performance, and may in particular provide an electromagnetic test signal/ field which is homogenous for the different coils.

In many embodiments, and as indicated by FIG. 2, the output of all induction balances/ sets of balanced detection coils are fed to the foreign object detector 205 which may measure the signals from all of the induction balances. The foreign object detector 205 may determine the voltage and/or current for each of the sets of balanced detection coils during the foreign object detection time intervals, e.g. typically the voltage of each set of balanced detection coils may be determined and used for the foreign object detection.

The foreign object detector 205 is arranged to apply a foreign object detection criterion to the signals from the induction balances during the foreign object detection time intervals. Each of these signals will henceforth for brevity also be referred to as detection signals. The foreign object detection criterion comprises at least two requirements that must be met in order for the foreign object detector 205 to determine that a foreign object has been detected.

The first requirement is that at least one detection signal indicates an imbalance between the signals induced in the two detection coils exceeding a first threshold for at least one of the sets of balanced detection coils. This requirement may be applied to each detection signal independently of any of the other detection signals. The first requirement may require that a detection signal from at least one induction balance indicates an imbalance exceeding a threshold. The imbalance may be an indication of the difference between the signals induced in the detection coils of the induction balance.

The first requirement may be evaluated by determining a detection value from a detection signal where the detection value is indicative of a degree of imbalance between the signals induced in the detection coils. In many embodiments, the current and/or voltage amplitude of the detection signals is indicative of the imbalance with an increasing amplitude indicating an increasing imbalance. Accordingly, in many embodiments, the detection value may be generated directly as the amplitude value of the detection signal or as a monotonically increasing function of the amplitude. The monotonically increasing function may be a complex function or may e.g. be a simple scaling or amplification of the detection signal amplitude.

In many embodiments, the first requirement may simply be that the amplitude of the detection signal from at least one set of balanced detection coils exceeds a detection threshold. The first requirement may thus be evaluated by considering each detection signal by itself and comparing the imbalance indication provided by each detection signal to a threshold value.

The detection coils are equivalent and symmetric with respect to a translation/ rotation. They will also typically be symmetric and equivalent with respect to the transmitter coil 103 and other properties of the power transfer setup. Typically, the same threshold will be applied to all sets of balanced detection coils. However, in some embodiments, the detection threshold may be a function of which set of balanced detection coils is being evaluated. Thus, in some embodiments, the detection threshold may vary and be different for different detection coils, e.g. to compensate for differences in the physical properties of these or differences in their relation to the transmitter coil 103 and the generated test signal.

In the approach, the foreign object detection criterion may thus include a first requirement which is indicative of there being an imbalance for at least one set of balanced detection coils. As previously described, such an imbalance may be caused by a foreign object being present, and thus the first requirement being met is a strong indicator that there may be a foreign object present.

However, in the approach, the foreign object detection criterion does not just include this requirement and a foreign object detection is not considered to have happened merely because one of the detection signals indicates a (sufficiently) high imbalance. Rather, in addition, a second requirement which considers the detections signals (or at least some of them) together is required to be met.

Indeed, the foreign object detection criterion comprises the second requirement that a number, henceforth for brevity also referred to as the detection number, of signals from the set of balanced detection coils indicating an imbalance between the signals induced in the two detection coils of the set of balanced detection coils exceeding a second threshold is less than a threshold number which is at least two.

The second requirement includes an evaluation of how many of the detection signals indicate an imbalance which is higher than a second threshold. This assessment may be performed as for the first requirement, e.g. the signal amplitude may be compared to a threshold, and it may be determined if the amplitude exceeds the threshold. As for the first requirement, the second requirement may be dependent on which set of balanced detection coils is being evaluated and thus may be different for different sets.

The number of induction balances for which the imbalance exceeds the threshold may be determined and the second requirement is only met if this number is lower than the threshold number, i.e. if fewer than the threshold number of induction balances indicate an imbalance above the second threshold.

In many embodiments, the first and second thresholds may be the same and the process of evaluating the first requirement may also directly provide the data that allows the determination of the detection number.

The detection number may thus be compared to the threshold number and only if the detection number is less than the threshold number will the second requirement, and thus the foreign object detection criterion be met.

Accordingly, in accordance with the approach, the first requirement being met may be seen as an indication that a foreign object has probably been detected, but this determination may be overridden by the second requirement in case the number of induction balances for which this is the case is not below a threshold number. In effect, the foreign object detection that may be considered to occur if one of the set of balanced detection coils detects an imbalance may be overridden if this is the case for sufficiently many of the sets of balanced detection coils.

In many embodiments, the threshold number may be no less than three and/or the threshold number may be equal to a number of sets of balanced detection coils in the plurality of sets of balanced detection coils.

E.g. for the example of FIG. 11, where the power transmitter comprises three induction balances, the second requirement may use a threshold number of three, resulting in any foreign object detection indication from evaluating each of the detection signals separately will be overridden if all of the detections signals indicate a sufficiently high imbalance. In this case, the foreign object detector 205 will not detect that a foreign object is present.

The approach may provide improved performance in many embodiments and scenarios and may substantially reduce the number of false foreign object detections that can occur based on balance detection. In particular, the Inventors have realized that in many scenarios, the effect of a foreign object on the sets of balanced detection coils can be separated from other events or causes by considering not only the individual signals from the sets of balanced detection coils but also considering how these relate to each other. Thus, by including a more global/ holistic consideration, many false foreign object detections can be avoided. The Inventors have in particular realized that the approach may allow a differentiation between scenarios in which a foreign object is present and scenarios in which a device or appliance comprising or forming the power receiver is moved relative to the power transmitter (and specifically the transmitter coil 103 and detection coils).

In many embodiments, particularly efficient operation may be achieved by the threshold number being equal to the number of sets of balanced detection coils. The second requirement may in some embodiments only override the foreign object detection of the first requirement if all of the detection signals indicate a sufficiently high imbalance. This may provide a more reliable foreign object detection in some embodiments with a further weighting towards the detection the presence of foreign object detections, i.e. with a bias towards detection. It may limit the override to only be activated if objects that are sufficiently large to affect all of the induction balances are present, i.e. smaller devices may be considered to be foreign objects. As the power receiver appliance/ device is not only present but also close to the transmitter coil 103 (and specifically typically at the center of this) during the power transfer, it is unlikely that a foreign object can be positioned such that it will affect all sets of balanced detection coils substantially and therefore an imbalance for all sets of balanced detection coils is very unlikely to be caused by anything else than a movement of the power receiver device/ appliance. Such constraints may further be emphasized by e.g. the geometric properties of the detection coils and the transmitter coil 103.

Similarly, in comparison to using a threshold number of two, the use of a threshold number of three may provide some particular advantages. Specifically, whereas it may be possible or even likely that a foreign object can be positioned such that it will cause an imbalance in two sets of balanced detection coils (e.g. if positioned across the area of two detection coils for different sets of balanced detection coils), it is much less likely that it is possible to position a foreign object such that it will have a strong impact on three sets of balanced detection coils. Indeed, this would typically require the foreign object to extend across three different detection coils which will in many applications be highly unlikely (or even impossible) in view of the necessity for a power receiver to be present in order for power transfer to occur.

In some embodiments, the foreign object detection criterion includes a third requirement that the signal from at least one of the plurality of induction balances showing an imbalance which exceeds a given first foreign object detection threshold does not exceed a second threshold which is higher than the first foreign object detection threshold, and typically may be an amplitude threshold which is no less than 2, 3, 5, or 10 times higher than the first foreign object detection threshold. Thus, if the imbalance is higher than a given level, it may be considered that a foreign object is present unless it is so high that the second threshold is exceeded.

Such an approach may thus detect foreign objects by the imbalance they cause to the induction balances. However, if the imbalance caused is extremely high, it is more likely that it is caused by the power receiver being moved rather than by a foreign object being present.

Thus, in the example, a foreign object detection may not only be overridden by a second requirement that the imbalance should not affect multiple induction balances but also by a third requirement that the imbalance should not be excessively large.

For example, if the imbalance signal becomes not only larger than the first threshold but the amplitude of the imbalance signal becomes even larger than a second higher threshold, it may be assumed that this is due to a receiver having moved. This may for example instead of causing a foreign object detection result in a recalibration of the foreign object detection to the new position of the power receiver.

It will be appreciated that a foreign object detection approach in which the foreign object detection criterion includes the third requirement but not the second requirement would be feasible and would provide advantageous performance in many systems and in many scenarios.

In many embodiments, the power transmitter of FIG. 2 further comprises a compensator 211 which is arranged to compensate the signal from one, more, and typically all of the sets of balanced detection coils for an imbalance between the signals induced in the two detection coils when no foreign object is present. In some embodiments, the compensation may be a static compensation that e.g. compensates for differences in geometric properties of different detection coils in the same set of balanced detection coils. However, in most embodiments, the compensator 211 is arranged to perform a dynamic compensation where the compensation value may be adapted during operation, such as e.g. when specific events occur.

In practice, the detection coils 207, 209 may be generated to be as identical as possible and may be designed to cancel induced signals as much as possible. However, in practice, it has been found that there tends to be some asymmetry and differences in the parameters of the detection coils 207, 209 as well as possibly in the electromagnetic environment even in the presence of no foreign objects. Further, the asymmetry and imbalance may in many scenarios result in a combined voltage over the detection coils 207, 209 being in the same order of magnitude as the voltage caused by some foreign objects that are desired to be detected. Therefore, even using balanced inductance/ detection coils may in some embodiments result in difficult or less than ideal detection performance.

The compensator 211 may be arranged to compensate the signals by measuring a value during a foreign object detection time interval where it is assumed that no foreign object is present, i.e. the signals resulting from the test signal may be determined when it is assumed that no foreign object is present. This may for example be indicated by a suitable foreign object detection having resulted in no detection of a foreign object, or may e.g. be considered the case in response to a specific user input being provided indicating that no foreign object is present. For example, the user may press a button to initialize a calibration/ compensation measurement. In some cases, the compensation measurement may be performed when a new power receiving device is detected and when the user positioning the new power receiving device on the power transmitter indicates that the user has checked that there are no foreign objects present.

Based on the measurement of the imbalance (which reflects the signal from the sets of balanced detection coils when no foreign object is present), compensation values may be determined and applied to each of the signals. Typically, the compensation value may be the opposite of the measured imbalance. For example, the voltage or current amplitude of the output signals from the sets of balanced detection coils may be measured when no foreign object is present. Subsequently, this measured amplitude may be subtracted from the measured amplitude of the signals from the sets of balanced detection coils to generate compensated signal amplitudes. These compensated signal amplitudes may then be used in the evaluation of the foreign object detection criterion rather than the measured amplitudes of the signals.

The compensator 211 may specifically generate a compensation value that offsets (has the opposite phase/ polarity) of the signal value from a set of balanced detection coils measured when no foreign object is (assumed to be) present.

In some embodiments, the compensation may not be a single value, such as a compensation current or voltage amplitude, but may be a compensation signal such as e.g. one with the same amplitude as the measured signal but with opposite phase (thus cancelling the imbalance signal). For example, a compensation signal may be generated to have a frequency that is the same as the measured signal (and as such the same as the electromagnetic test signal). The phase and/or amplitude may be set to values that provide the desired compensation.

In some embodiments, the phase and/or amplitude may be predetermined values. For example, during manufacturing or design, the asymmetry between the detection coils with respect to the generated electromagnetic test signal may be estimated (based on a theoretical analysis and/or measurements) and suitable compensation drive signal parameter values may be determined. These may then be applied during foreign object detection time intervals.

In many embodiments, the compensation circuit 1103 may however be arranged to dynamically adapt a parameter of the compensation signal and specifically may be arranged to adapt e.g. the voltage amplitude and/or the phase of a compensation signal.

The compensation may in many embodiments provide improved foreign object detection. Indeed, even if the detection coils 207, 209 were perfectly balanced and/or perfectly characterized during a manufacturing phase, the electromagnetic field and thus the induced signals will also depend on the specific environment and in particular will tend to vary depending on e.g. which power receiving appliance is used and exactly where this is positioned. Therefore, being able to dynamically adapt the compensation and specifically to calibrate it to the current electromagnetic environment may substantially improve performance. The compensation may be useful to mitigate or reduce imbalances between detection coils and/or the environment around these. This may provide improved performance in many scenarios and may specifically provide a more accurate foreign object detection.

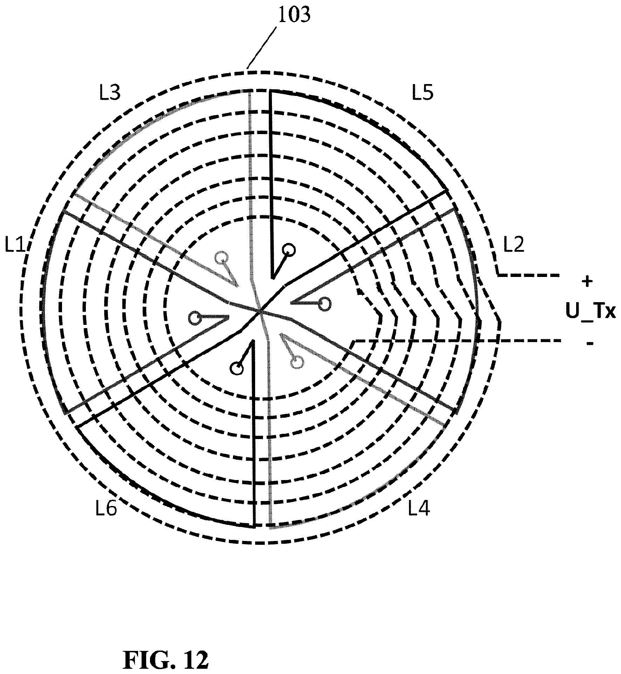

As an example, the arrangement of FIG. 12 may be considered for a system where the foreign object detection is based on measuring voltage amplitudes Ufod from sets of balanced detection coils each comprising two detection coils (L1, L2), (L3,L4) and (L5, L6).

In this example, before initiating power transfer, a dynamic calibration of the foreign object detection system may be performed to compensate/ remove the original offsets from the voltages Ufod (L1 - L2), Ufod (L3 - L4) and Ufod (L5 - L6). These offset voltages may be due to an inhomogeneous detection H-field. In the example, the windings of the transmitter coil 103 are not completely circle symmetrically mounted on the coil former. In this example induction balance L3 - L4 and L5 - L6 capture more or less the same homogeneous detection H-field. However, the magnetic field captured by induction balance L1 - L2 is not homogeneous due the local wiring layout of the transmitter coil 103 under coil L2. For this condition, active calibration can be applied by compensation of the voltage Ufod (L1 - L2) of induction balance L1 - L2 with a signal Ucomp (L1 - L2) with the right amplitude and phase with respect the voltage U_Tx.

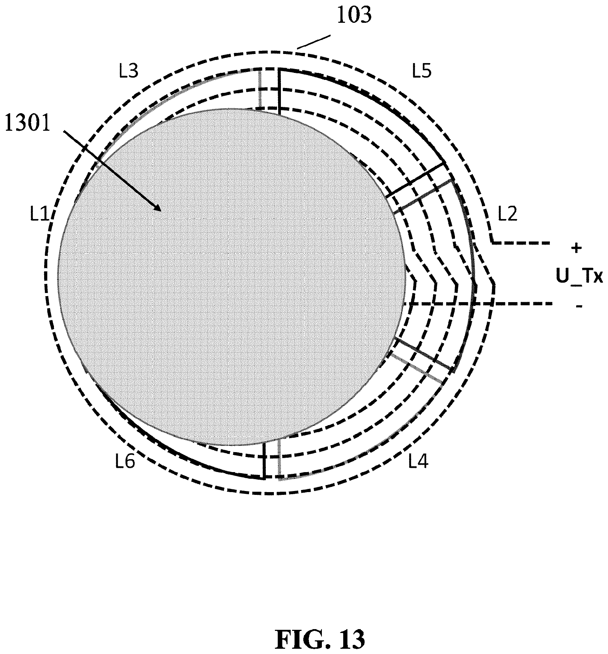

Fig. 13 shows another cause of offset voltages. If a power receiver device/ appliance 1301 is positioned on the active area of the power transmitter with a misalignment, it is to be expected that the detection H-field from the transmitter coil 103 is even more distorted and that it becomes inhomogeneous, especially if the appliance includes metal parts.

In this example, an active offset calibration may also be performed. Due to the size of the appliance 1301 with respect to the size of active area it is plausible that the distribution of the detection H-field from the transmitter coil 103 becomes inhomogeneous over a large area, and likely over the entire area. As a result, all three induction balances are affected and generate signals with an offset. In this situation three independent compensation voltages Ucomp (L1 - L2), Ucomp (L3 - L4) and Ucomp (L5 - L6) may be determined and applied to the three induction balances respectively with each of these having the right amplitude and phase with respect the voltage induced offset imbalance signal.

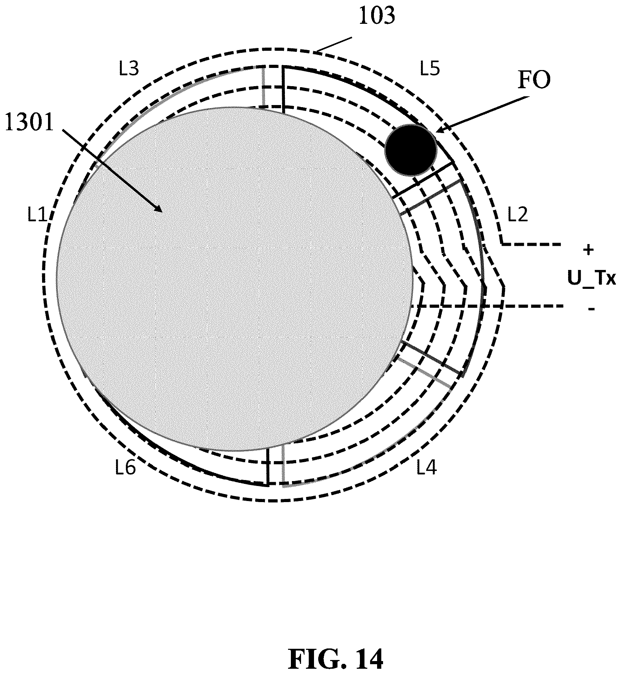

In the example of FIG. 14, a foreign object FO is placed on the active area after the active calibration has been performed and with the compensations being applied. Due to its location on the active area, it is to be expected that the detection H-field from the transmitter coil 103 becomes inhomogeneous near induction balances L1 - L2 and L5 - L6. As a result, a detection voltage appears at the terminals of both of these induction balances leading to the first requirement of the foreign object detection criterion being met. It is however unlikely that the foreign object will cause an imbalance in the third induction balance L3-L4 and if the threshold number is set to the number of induction balances, i.e. to three, the second requirement is also met. Thus, the foreign object detector 205 determines that a foreign object has been detected. Thus, as illustrated, the triple induction balance system is able to detect a foreign object, even if a misaligned appliance is located on top of the active area.

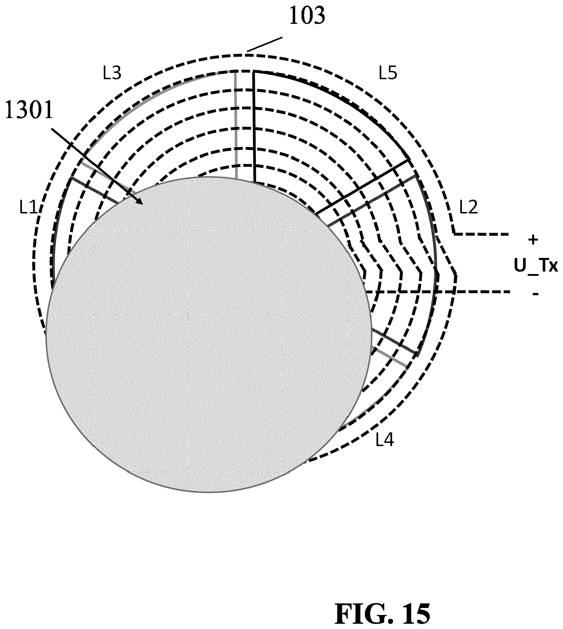

In the example of FIG. 15, there is no foreign object but instead the appliance 1301 has been moved from its original position on the active area. This displacement results in a change of the distribution of the detection H-field of the transmitter coil 103 (i.e. the test field) over the full detection area. If the triple induction balance system is properly calibrated before this displacement, this will result in the balanced condition for all three induction balances being affected and a detection voltage is generated for all three induction balances. In this case, the first requirement of the foreign object detection will be met, and thus the initial indication that a foreign object may be present is triggered. However, the second requirement is not met as all three induction balances show a substantial imbalance/ detection signal. Accordingly, the first indication is overridden and the foreign object detector 205 does not generate a detection of a foreign object. Thus, a false positive foreign object detection can be avoided.

The compensator 211 may be arranged to update/adapt/ calibrate the compensation at different times and in different situations depending on the preferences and requirements of the individual embodiment. In many embodiments, the compensator 211 may be arranged to initiate an adaptation of the compensation when it is detected that a new power receiving appliance is positioned on the power transmitter. This may allow the compensation to not only be adapted to the static properties but also e.g. to the position of the power receiving device on the power transmitter.

In some embodiments, the compensator 211 is arranged to initiate an adaption of the compensation in response to the second requirement of the foreign object detection criterion being met. Thus, if an imbalance is detected by more than a threshold number of induction balances, and often if an imbalance is detected for all induction balances, then the compensator 211 may initiate a new adaptation of the compensation. Specifically, new values of the signals (e.g. amplitude and phase of the voltage and/or current) from the different induction balances may measured and used as the new compensation signals going forward.

As previously described, an imbalance that affects all induction balances is likely to be due to a position change of the power receiver rather than to a foreign object being present. Similarly, an imbalance that is extremely high (higher than the second threshold, i.e. if the third criterion is met) may indicate that the power receiver has moved rather than a foreign object being present. Accordingly, the adaptation of the compensation may allow improved foreign object detection as it can adapt to the new position allowing a more accurate measurement of possible imbalances caused by a foreign object.

In some embodiments, the compensator 211 may be arranged to adapt the power transfer in response to the adaptation of the compensation. In some embodiments, the compensator 211 may be arranged to reduce or constrain a power level of the power transfer signal in response to a detection that the compensation requires compensation values meeting a criterion. The criterion may specifically correspond to a criterion that one or more of the determined compensation values (specifically an amplitude) exceeds a threshold. If the threshold is met, it indicates that at least one imbalance is higher than a given threshold. This may possibly be due to a foreign object being present and therefore the power level may be reduced. In many scenarios, a high imbalance may occur due to the position of the power receiving device deviating substantially from the ideal centralized position. This may impede power transfer and reduce efficiency etc. The power level may accordingly be reduced. This may often be noticeable by the user, or indeed a dedicated user indication may be provided, and this may cause the user to often reposition the power receiving device.

In many embodiments, the reduction in the power level may specifically be a termination or a prevention of a power transfer. For example, if the compensator 211 during an initialization of a power transfer detects that the compensation values indicate an imbalance for one or more of the induction balances which is above the detection thresholds, the initialization may be terminated and the compensator 211 may prevent the power transmitter from entering the power transfer phase. If the power transmitter is already in the power transfer phase, this may be terminated. Thus, the compensation values may be used to detect whether the current operating conditions are acceptable, such as specifically whether the power receiving device is suitable positioned on the power transmitter active area.

In some embodiments, the power transmitter may be arranged to adapt an operating parameter in response to a detection that the condition of the second requirement of the foreign object detection criterion is met.

The operating parameter may be an operating parameter of the power transfer, such as a power level, a frequency, a duty cycle, a duration of the power transfer time intervals etc. Specifically, similarly as for the detection that the compensation values determined when adapting the compensating indicate an imbalance, the detection that the second requirement is met may result in a reduction of the power level. For example, a maximum power level may be employed for the power transfer and this maximum power level may be reduced if the second requirement is met.

As previously mentioned, the second requirement may be considered to be an indication that it is likely that the power receiving appliance has been moved which may lead to different operating conditions. The foreign object detector 205 may in this case reduce the power level to ensure safe and reliable operation, and indeed may as a specific case even terminate the power transfer. The power receiver may then proceed to enter an operational mode where full power transfer is gradually achieved by the system gradually adapting to the new operating conditions (e.g. a slow power control operation may be used or a full re-initialization of the power transfer may be performed if the ongoing power transfer was terminated).

In some embodiments, the parameter that is adapted may be an operating parameter of the foreign object detection, and specifically may be a parameter of the first requirement, of the second requirement, or of both.

The adaptation of the compensation values if the second requirement is met is an example of such an adaptation as the application of the compensation values are part of the evaluation of both the first and the second requirement (since the comparisons of both may be based on the signal values after compensation).

As another example, in many embodiments, the detection thresholds used for the first and/or the second requirement may be adapted when the second criterion has been detected to be met.

For example, in some embodiments, the foreign object detector 205 may start with a predetermined value for the threshold for the first requirement. As the power transfer is ongoing and no foreign objects are detected and for example the detected imbalance values are substantially smaller than the predetermined threshold, the threshold may gradually be reduced to make the detection more sensitive to smaller foreign objects. However, if the second requirement is met, the threshold may be returned to the predetermined threshold to reflect the uncertainty of the exact conditions for the new position. The same approach may be used for the second requirement.

In some embodiments, the requirements may include a calculation or processing of the signal values and the foreign object detector 205 may be arranged to adapt the calculation or processing when the second requirement is met, and thus when a possible movement of the power receiving appliance is detected.

In some embodiments, the adapter 213 may more generally be arranged to adapt an operating parameter of the power transfer in response to imbalances between the signals induced in the detection coils of the induction balances, and specifically for at least two induction balances. For example, the above described adaptation of the operating parameter need not necessarily be in response to the same detection as the one used in the foreign object detection. For example, in some embodiments, different thresholds may be applied for determining if an adaptation of the foreign object detection operation is performed than is used for the actual foreign object detection evaluation.

In many embodiments, the adapter 213 may be arranged to adapt a parameter of the power transfer such that the power level may be reduced if a measure of imbalance for the induction balances exceed a given level. The measure of imbalance may for example be determined as an average or sum imbalance or a maximum imbalance.

In some embodiments, the power transmitter may comprise a receiver 215 which is arranged to receive data from the power receiver. In such embodiments, the power receiver may be arranged to transmit a physical property data to the power transmitter where the physical property data is indicative of one or more physical properties, and specifically extensive physical properties, of the power receiver. For example, the physical property data may be indicative of a size, extension, dimension, etc. of the power receiving device. The physical property data may thus be indicative of a spatial extensive property of the power receiving device. In some embodiments, the physical property data may alternatively or additionally be indicative of a spatial extension or e.g. amount of conductive material (metal) that is part of the power receiving device.

In such embodiments, the physical property data may be fed to the adapter 213 which may be arranged to adapt an operating parameter of the foreign object detection in response to the physical property data. The operating parameter may specifically be a parameter of the first requirement and/or a parameter of the second requirement. The parameter may specifically be the detection threshold for the requirements and/or a parameter of a function or algorithm used to determine the value to which the detection threshold is compared.

The approach may in particular be advantageous for adapting the second requirement. For example, for small power receiving devices, the movement of the device may not result in significant imbalances in all induction balances. Further, a small power receiving device may allow a large foreign object to be present, and thus could potentially be positioned such that it could create an imbalance in all induction balances that possibly could be comparable to that resulting from a misalignment of the power receiving device. In contrast, for a sufficiently large power receiving device, it can be ensured that misalignment and movement impacts all induction balances and that the device is so big that any foreign object will be too small to have a significant effect on all induction balances. In such cases, the second requirement may be switched off (e.g. by setting the detection threshold to a value that cannot occur) if the physical property data indicates a power receiving device with a size less than a given predetermined size, and may be switched on for the physical property data indicating a larger size than the predetermined size.

The physical property data may in some embodiments additionally or alternatively be used to adapt the compensation. For example, an adaptation of the compensation to determine compensation values may only be performed if the physical property data indicates that the power receiving device comprises more than a given amount of metal.

In some embodiments, the power controller 203 is arranged to generate a position change indication in response to the second requirement being met. The meeting of the second criterion may as previously described be considered an indication that it is likely that the power receiver appliance/ device has moved rather than a foreign object being present. In some embodiments, the meeting of the second requirement may (possibly independently of the evaluation of the first requirement) accordingly be used to indicate that a movement of the power receiver has been detected.

The movement indication may be used for different things in different embodiments. In some embodiments, it may be used to generate a user indication, such as an audio alarm, indicating to the user that the power receiver appliance has moved and should possibly be moved (by the user) back to a more optimal position for the charging.

In other embodiments, the movement indication may be used to adapt an operating parameter of the power transfer, such as a maximum power transfer level. For example, if a movement is detected, the power level may be constrained to a lower power limit immediately after the detection. The power level may then be gradually increased for the new operating situation while ensuring that the power transfer is reliable and safe (e.g. by ensuring that no foreign objects are detected for an extended period).

In some embodiments, the movement indication may be used to indicate a change of the power control loop. For example, a loop gain, loop filter response, or time constant of the loop may be adapted. For example, during normal operation, the loop performance may have been optimized for the current operating scenario by slowly adapting the loop gain while ensuring loop stability. If the power receiver is moved quickly, the change in coupling factor may result in a substantially changed loop behavior and this may potentially result in potential instability for the current loop parameters. Accordingly, the power controller 203 may when the movement indication is generated change the loop gain to a predetermined and safe value which ensures stability for all coupling factors. The system may then again begin an adaptation of the loop (and specifically the loop gain) to provide e.g. faster loop response while still ensuring stability for the current conditions.

It will be appreciated that the above description for clarity has described embodiments of the invention with reference to different functional circuits, units and processors. However, it will be apparent that any suitable distribution of functionality between different functional circuits, units or processors may be used without detracting from the invention. For example, functionality illustrated to be performed by separate processors or controllers may be performed by the same processor or controllers. Hence, references to specific functional units or circuits are only to be seen as references to suitable means for providing the described functionality rather than indicative of a strict logical or physical structure or organization.

The invention can be implemented in any suitable form including hardware, software, firmware or any combination of these. The invention may optionally be implemented at least partly as computer software running on one or more data processors and/or digital signal processors. The elements and components of an embodiment of the invention may be physically, functionally and logically implemented in any suitable way. Indeed, the functionality may be implemented in a single unit, in a plurality of units or as part of other functional units. As such, the invention may be implemented in a single unit or may be physically and functionally distributed between different units, circuits and processors.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. In the claims, the term comprising does not exclude the presence of other elements or steps.

It will be appreciated that the reference to a preferred value does not imply any limitation beyond it being the value determined in the foreign object detection initialization mode, i.e. it is preferred by virtue of it being determined in the adaptation process. The references to a preferred value could be substituted for references to e.g. a first value.

Furthermore, although individually listed, a plurality of means, elements, circuits or method steps may be implemented by e.g. a single circuit, unit or processor.

Thus, references to "a", "an", "first", "second" etc. do not preclude a plurality. Reference signs in the claims are provided merely as a clarifying example shall not be construed as limiting the scope of the claims in any way.

## Claims

1. A power transmitter (101) for wirelessly providing power to a power receiver (105) via an inductive power transfer signal; the power transmitter (101) comprising:
a transmitter coil (103);
a driver (201) for generating a drive signal for the transmitter coil (103);
a plurality of sets of balanced detection coils (207, 209) coupled in series, each set of balanced detection coils (207, 209) comprising two symmetric detection coils arranged such that signals induced in the two detection coils by an electromagnetic field generated by the transmitter coil (103) compensate each other;
a foreign object detector (205) coupled to the plurality of sets of balanced detection coils (207, 209) and arranged to perform foreign object detection during the foreign object detection time interval, the foreign object detector (205) being arranged to detect a foreign object in response to signals from the plurality of sets of balanced detection coils (207, 209) meeting a foreign object detection criterion, the foreign object detection criterion including:
a first requirement that a signal from at least one of the plurality of sets of balanced detection coils (207, 209) indicates an imbalance between signals induced in the two detection coils of the at least one of the plurality of sets of balanced detection coils (207, 209) exceeding a first threshold; wherein the power transmitter is **characterized by**:
the driver (201) being arranged to generate the drive signal for the transmitter coil (103) to generate the power transfer signal during at least one power transfer time interval of a repeating time frame and to generate the drive signal for the transmitter coil (103) to generate an electromagnetic test signal during at least one foreign object detection time interval of the repeating time frame and by
the foreign object detection criterion further including a second requirement that a number of signals from the plurality of sets of balanced detection coils (207, 209) indicating an imbalance between signals induced in the two detection coils of the set of balanced detection coils (207, 209) exceeding a second threshold is less than a threshold number, the threshold number being at least two.

2. The power transmitter (101) of claim 1 wherein the threshold number is no less than three.

3. The power transmitter (101) of claim 1 wherein the threshold number is equal to a number of sets of balanced detection coils (207, 209) in the plurality of sets of balanced detection coils (207, 209).

4. The power transmitter (101) of any previous claim further comprising an adapter (213) for adapting an operating parameter of the power transfer in response to a determination that the second requirement is met.

5. The power transmitter (101) of any previous claim further comprising an adapter (213) for adapting an operating parameter of the foreign object detection in response to a determination that the second requirement is met.

6. The power transmitter (101) of claim 5 wherein the operating parameter is a parameter of the first requirement.

7. The power transmitter (101) of claim 5 wherein the operating parameter is a parameter of the second requirement.

8. The power transmitter (101) of any previous claim further comprising:
a receiver (215) arranged to receive data from the power receiver (105), the data including physical property data for a power receiving device comprising the power receiver (105); for adapting an operating parameter of the foreign object detection in response to the physical property data.

9. The power transmitter (101) of claim 8 wherein the operating parameter is a parameter of the second requirement.

10. The power transmitter (101) of any previous claim further comprising a compensator (211) arranged to compensate the signal from at least one set of balanced detection coils (207, 209) for an imbalance between the signals induced in the two detection coils when no foreign object is present.

11. The apparatus of claim 10 wherein the compensator (211) is arranged to initiate an adaption of the compensation in response to the second requirement being met.

12. The power transmitter (101) of claim 10 or 11 wherein the compensator (211) is arranged to reduce a power level of the power transfer signal in response to a detection that the compensation requires compensation values meeting a criterion.

13. The power transmitter (101) of any previous claim further comprising an adapter (213) for adapting an operating parameter of the power transfer in response to imbalances between the signals induced in the two detection coils of the set of balanced detection coils (207, 209)for at least two sets of balanced detection coils (207, 209) of the plurality of sets of balanced detection coils (207, 209).

14. The power transmitter (101) of any previous claim further comprising a circuit (203) for generating a position change indication in response to a determination that the second requirement is met, the position change indication indicating a change of position of the power receiver (105).

15. The power transmitter (101) of any previous claim wherein the foreign object detection criterion includes:
a third requirement that the signal from at least one of the plurality of sets of balanced detection coils (207, 209) indicates an imbalance between signals induced in the two detection coils of the at least one of the plurality of sets of balanced detection coils (207, 209) does not exceeding a second threshold; the second threshold being larger than the first threshold.

16. A method of operation for a power transmitter (101) wirelessly providing power to a power receiver (105) via an inductive power transfer signal; the power transmitter (101) comprising:
a transmitter coil (103);
a plurality of sets of balanced detection coils (207, 209) coupled in series, each set of balanced detection coils (207, 209) comprising two symmetric detection coils arranged such that signals induced in the two detection coils by an electromagnetic field generated by the transmitter coil (103) compensate each other; the method comprising
generating a drive signal for the transmitter coil (103) to generate the power transfer signal during at least one power transfer time interval of a repeating time frame and to generate the drive signal for the transmitter coil to generate an electromagnetic test signal during at least one foreign object detection time interval of the repeating time frame;
a foreign object detector (205) coupled to the plurality of sets of balanced detection coils (207, 209) and performing foreign object detection during the foreign object detection time interval, the detection of a foreign object being in response to signals from the plurality of sets of balanced detection coils (207, 209) meeting a foreign object detection criterion, the foreign object detection criterion including:
a first requirement that a signal from at least one of the plurality of sets of balanced detection coils (207, 209) indicates an imbalance between signals induced in the two detection coils of the at least one of the plurality of sets of balanced detection coils (207, 209) exceeding a first threshold; and
a second requirement that a number of signals from the plurality of sets of balanced detection coils (207, 209) indicating an imbalance between signals induced in the two detection coils of the set of balanced detection coils (207, 209) exceeding a second threshold is less than a threshold number, the threshold number being at least two.

## Patentansprüche

1. Ein Leistungssender (101) zum drahtlosen Bereitstellen von Leistung an einen Leistungsempfänger (105) über ein induktives Leistungsübertragungssignal; der Leistungssender (101) umfasst:
eine Sendespule (103);
einen Treiber (201) zum Erzeugen eines Antriebssignals für die Sendespule (103);
eine Vielzahl von Sätzen symmetrischer Detektionsspulen (207, 209), die in Reihe geschaltet sind, wobei jeder Satz symmetrischer Detektionsspulen (207, 209) zwei symmetrische Detektionsspulen umfasst, die so angeordnet sind, dass sich durch ein von der Senderspule (103) erzeugtes elektromagnetisches Feld induzierte Signale in den beiden Detektionsspulen gegenseitig kompensieren;
einen Fremdkörperdetektor (205), der mit der Vielzahl von Sätzen symmetrischer Detektionsspulen (207, 209) gekoppelt ist und derart angeordnet ist, dass er während des Fremdkörperdetektionszeitintervalls eine Fremdkörperdetektion durchführt, wobei der Fremdkörperdetektor (205) derart angeordnet ist, dass er einen Fremdkörper als Reaktion auf Signale von der Vielzahl von Sätzen symmetrischer Detektionsspulen (207, 209) detektiert, die ein Fremdkörperdetektionskriterium erfüllen, wobei das Fremdkörperdetektionskriterium beinhaltet:
eine erste Anforderung, dass ein Signal von mindestens einem der Vielzahl von Sätzen symmetrischer Detektionsspulen (207, 209) ein Ungleichgewicht zwischen in den beiden Detektionsspulen des mindestens einen der Vielzahl von Sätzen symmetrischer Detektionsspulen (207, 209) induzierten Signalen anzeigt, das einen ersten Schwellenwert überschreitet; wobei der Leistungssender **dadurch gekennzeichnet ist, dass**:
der Treiber (201) dazu angeordnet ist, das Antriebssignal für die Senderspule (103) zu erzeugen, um das Energieübertragungssignal während mindestens eines Energieübertragungszeitintervalls eines sich wiederholenden Zeitrahmens zu erzeugen, und das Antriebssignal für die Senderspule (103) zu erzeugen, um ein elektromagnetisches Testsignal während mindestens eines Fremdkörpererkennungszeitintervalls des sich wiederholenden Zeitrahmens zu erzeugen, und durch
wobei das Fremdkörpererkennungskriterium weiter eine zweite Anforderung beinhaltet, dass eine Anzahl von Signalen von der Vielzahl von Sätzen symmetrischer Erkennungsspulen (207, 209), die ein Ungleichgewicht zwischen in den beiden Erkennungsspulen des Satzes symmetrischer Erkennungsspulen (207, 209) induzierten Signalen anzeigen, die einen zweiten Schwellenwert überschreiten, kleiner als eine Schwellenwertzahl ist, wobei die Schwellenwertzahl mindestens zwei beträgt.

2. Der Leistungssender (101) nach Anspruch 1, wobei die Schwellenzahl nicht kleiner als drei ist.

3. Der Leistungssender (101) nach Anspruch 1, wobei die Schwellenzahl gleich einer Anzahl von Sätzen symmetrischer Detektionsspulen (207, 209) in der Vielzahl von Sätzen symmetrischer Detektionsspulen (207, 209) ist.

4. Der Leistungssender (101) nach einem vorstehenden Anspruch, weiter umfassend einen Adapter (213) zum Anpassen eines Betriebsparameters der Leistungsübertragung als Reaktion auf eine Feststellung, dass die zweite Anforderung erfüllt ist.

5. Der Leistungssender (101) nach einem vorstehenden Anspruch, weiter umfassend einen Adapter (213) zum Anpassen eines Betriebsparameters der Fremdkörpererkennung als Reaktion auf eine Feststellung, dass die zweite Anforderung erfüllt ist.

6. Der Leistungssender (101) nach Anspruch 5, wobei der Betriebsparameter ein Parameter der ersten Anforderung ist.

7. Der Leistungssender (101) nach Anspruch 5, wobei der Betriebsparameter ein Parameter der zweiten Anforderung ist.

8. Der Leistungssender (101) nach einem vorstehenden Anspruch, weiter umfassend:
einen Empfänger (215), der zum Empfangen von Daten vom Leistungsempfänger (105) angeordnet ist, wobei die Daten physikalische Eigenschaftsdaten für eine Leistungsempfangsvorrichtung beinhalten, das den Leistungsempfänger (105) umfasst; zum Anpassen eines Betriebsparameters der Fremdkörpererkennung als Reaktion auf die physikalischen Eigenschaftsdaten.

9. Der Leistungssender (101) nach Anspruch 8, wobei der Betriebsparameter ein Parameter der zweiten Anforderung ist.

10. Der Leistungssender (101) nach einem vorstehenden Anspruch, weiter umfassend einen Kompensator (211), der zum Kompensieren des Signals von mindestens einem Satz symmetrischer Detektionsspulen (207, 209) angeordnet ist, bei einem Ungleichgewicht zwischen den in den beiden Detektionsspulen induzierten Signalen, wenn kein Fremdobjekt vorhanden ist.

11. Die Einrichtung nach Anspruch 10, wobei der Kompensator (211) so angeordnet ist, dass er als Reaktion auf die Erfüllung der zweiten Anforderung eine Anpassung der Kompensation einleitet.

12. Der Leistungssender (101) nach Anspruch 10 oder 11, wobei der Kompensator (211) dazu angeordnet ist, einen Leistungspegel des Leistungsübertragungssignals als Reaktion auf eine Erkennung zu reduzieren, dass die Kompensation Kompensationswerte erfordert, die ein Kriterium erfüllen.

13. Der Leistungssender (101) nach einem vorstehenden Anspruch, weiter umfassend einen Adapter (213) zum Anpassen eines Betriebsparameters der Leistungsübertragung als Reaktion auf Ungleichgewichte zwischen den in den beiden Erkennungsspulen des Satzes symmetrischer Erkennungsspulen (207, 209) induzierten Signalen für mindestens zwei Sätze symmetrischer Erkennungsspulen (207, 209) der Vielzahl von Sätzen symmetrischer Erkennungsspulen (207, 209).

14. Der Leistungssender (101) nach einem vorstehenden Anspruch, weiter umfassend eine Schaltung (203) zum Erzeugen einer Positionsänderungsanzeige als Reaktion auf eine Feststellung auf, dass die zweite Anforderung erfüllt ist, wobei die Positionsänderungsanzeige eine Positionsänderung des Leistungsempfängers (105) anzeigt.

15. Der Leistungssender (101) nach einem vorstehenden Anspruch, wobei das Fremdkörpererkennungskriterium Folgendes beinhaltet:
eine dritte Anforderung, dass das Signal von mindestens einem der Vielzahl von Sätzen symmetrischer Detektionsspulen (207, 209) ein Ungleichgewicht zwischen in den beiden Detektionsspulen des mindestens einen der Vielzahl von Sätzen symmetrischer Detektionsspulen (207, 209) induzierten Signalen anzeigt, das einen zweiten Schwellenwert nicht überschreitet; wobei der zweite Schwellenwert größer als der erste Schwellenwert ist.

16. Ein Betriebsverfahren für einen Leistungssender (101), der einen Leistungsempfänger (105) drahtlos über ein induktives Leistungsübertragungssignal mit Leistung versorgt; der Leistungssender (101) umfasst:
eine Sendespule (103);
eine Vielzahl von Sätzen symmetrischer Detektionsspulen (207, 209), die in Reihe geschaltet sind, wobei jeder Satz symmetrischer Detektionsspulen (207, 209) zwei symmetrische Detektionsspulen umfasst, die so angeordnet sind, dass sich durch ein von der Senderspule (103) erzeugtes elektromagnetisches Feld induzierte Signale in den beiden Detektionsspulen gegenseitig kompensieren; das Verfahren umfasst
Erzeugen eines Antriebssignals für die Senderspule (103), um das Energieübertragungssignal während mindestens eines Energieübertragungszeitintervalls eines sich wiederholenden Zeitrahmens zu erzeugen, und das Antriebssignal für die Senderspule zu erzeugen, um ein elektromagnetisches Testsignal während mindestens eines Fremdkörpererkennungszeitintervalls des sich wiederholenden Zeitrahmens zu erzeugen;
einen Fremdkörperdetektor (205), der mit der Vielzahl von Sätzen symmetrischer Detektionsspulen (207, 209) gekoppelt ist und während des Fremdkörperdetektionszeitintervalls eine Fremdkörperdetektion durchführt, wobei die Detektion eines Fremdkörpers als Reaktion auf Signale von der Vielzahl von Sätzen symmetrischer Detektionsspulen (207, 209) erfolgt, die ein Fremdkörperdetektionskriterium erfüllen, wobei das Fremdkörperdetektionskriterium beinhaltet:
eine erste Anforderung, dass ein Signal von mindestens einem der Vielzahl von Sätzen symmetrischer Detektionsspulen (207, 209) ein Ungleichgewicht zwischen in den beiden Detektionsspulen des mindestens einen der Vielzahl von Sätzen symmetrischer Detektionsspulen (207, 209) induzierten Signalen anzeigt, das einen ersten Schwellenwert überschreitet; und
eine zweite Anforderung, dass eine Anzahl von Signalen von der Vielzahl von Sätzen symmetrischer Detektionsspulen (207, 209), die ein Ungleichgewicht zwischen in den beiden Detektionsspulen des Satzes symmetrischer Detektionsspulen (207, 209) induzierten Signalen anzeigen, die einen zweiten Schwellenwert überschreiten, kleiner als eine Schwellenwertzahl ist, wobei die Schwellenwertzahl mindestens zwei beträgt.

## Revendications

1. Émetteur d'énergie (101) pour fournir sans fil de l'énergie à un récepteur d'énergie (105) via un signal de transfert d'énergie inductif; l'émetteur d'énergie (101) comprenant :
une bobine émettrice (103) ;
un circuit d'attaque (201) pour générer un signal d'attaque destiné à la bobine émettrice (103) ;
une pluralité d'ensembles de bobines de détection équilibrées (207, 209) couplées en série, chaque ensemble de bobines de détection équilibrées (207, 209) comprenant deux bobines de détection symétriques agencées de telle sorte que les signaux induits dans les deux bobines de détection par un champ électromagnétique généré par la bobine émettrice (103) se compensent mutuellement ;
un détecteur (205) de corps étranger couplé à la pluralité d'ensembles de bobines de détection équilibrées (207, 209) et agencé pour effectuer une détection de corps étranger pendant l'intervalle de temps de détection de corps étranger, le détecteur (205) de corps étranger étant agencé pour détecter un corps étranger en réponse à des signaux provenant de la pluralité d'ensembles de bobines de détection équilibrées (207, 209) satisfaisant à un critère de détection de corps étranger, le critère de détection de corps étranger incluant :
une première exigence selon laquelle un signal provenant d'au moins un de la pluralité d'ensembles de bobines de détection équilibrées (207, 209) indique un déséquilibre entre les signaux induits dans les deux bobines de détection du au moins un de la pluralité d'ensembles de bobines de détection équilibrées (207, 209) dépassant un premier seuil ; dans lequel l'émetteur d'énergie est **caractérisé par** :
le circuit d'attaque (201) étant agencé pour générer le signal d'attaque destiné à la bobine émettrice (103) pour générer le signal de transfert d'énergie pendant au moins un intervalle de temps de transfert d'énergie d'un laps de temps répété et pour générer le signal d'attaque destiné à la bobine émettrice (103) pour générer un signal de test électromagnétique pendant au moins un intervalle de temps de détection de corps étranger du laps de temps répété et par
le critère de détection de corps étrangers incluant en outre une deuxième exigence selon laquelle un certain nombre de signaux provenant de la pluralité d'ensembles de bobines de détection équilibrées (207, 209) indiquant un déséquilibre entre les signaux induits dans les deux bobines de détection de l'ensemble de bobines de détection équilibrées (207, 209) dépassant un second seuil est inférieur à un nombre seuil, le nombre seuil étant d'au moins deux.

2. Émetteur d'énergie (101) selon la revendication 1, dans lequel le nombre seuil est supérieur ou égal à trois.

3. Émetteur d'énergie (101) selon la revendication 1, dans lequel le nombre seuil est égal à un nombre d'ensembles de bobines de détection équilibrées (207, 209) dans la pluralité d'ensembles de bobines de détection équilibrées (207, 209).

4. Émetteur d'énergie (101) selon une quelconque revendication précédente, comprenant en outre un adaptateur (213) pour adapter un paramètre de fonctionnement du transfert d'énergie en réponse à une détermination selon laquelle la deuxième exigence est satisfaite.

5. Émetteur d'énergie (101) selon une quelconque revendication précédente, comprenant en outre un adaptateur (213) pour adapter un paramètre de fonctionnement de la détection de corps étrangers en réponse à une détermination selon laquelle la deuxième exigence est satisfaite.

6. Émetteur d'énergie (101) selon la revendication 5, dans lequel le paramètre de fonctionnement est un paramètre de la première exigence.

7. Émetteur d'énergie (101) selon la revendication 5, dans lequel le paramètre de fonctionnement est un paramètre de la deuxième exigence.

8. Émetteur d'énergie (101) selon une quelconque revendication précédente, comprenant en outre :
un récepteur (215) agencé pour recevoir des données du récepteur d'énergie (105), les données incluant des données de propriétés physiques d'un dispositif de réception d'énergie comprenant le récepteur d'énergie (105) ; pour adapter un paramètre de fonctionnement de la détection de corps étrangers en réponse aux données de propriété physique.

9. Émetteur d'énergie (101) selon la revendication 8, dans lequel le paramètre de fonctionnement est un paramètre de la deuxième exigence.

10. Émetteur d'énergie (101) selon une quelconque revendication précédente, comprenant en outre un compensateur (211) agencé pour compenser le signal provenant d'au moins un ensemble de bobines de détection équilibrées (207, 209) lors d'un déséquilibre entre les signaux induits dans les deux bobines de détection lorsqu'aucun corps étranger n'est présent.

11. Appareil selon la revendication 10, dans lequel le compensateur (211) est agencé pour initier une adaptation de la compensation dans le cas où la deuxième exigence est satisfaite.

12. Émetteur d'énergie (101) selon la revendication 10 ou 11, dans lequel le compensateur (211) est agencé pour réduire un niveau d'énergie du signal de transfert d'énergie en réponse à une détection selon laquelle la compensation nécessite des valeurs de compensation satisfaisant à un critère.

13. Émetteur d'énergie (101) selon une quelconque revendication précédente, comprenant en outre un adaptateur (213) pour adapter un paramètre de fonctionnement du transfert d'énergie en réponse à des déséquilibres entre les signaux induits dans les deux bobines de détection de l'ensemble de bobines de détection équilibrées (207, 209) pour au moins deux ensembles de bobines de détection équilibrées (207, 209) parmi la pluralité d'ensembles de bobines de détection équilibrées (207, 209).

14. Émetteur d'énergie (101) selon une quelconque revendication précédente, comprenant en outre un circuit (203) pour générer une indication de changement de position en réponse à une détermination selon laquelle la deuxième exigence est satisfaite, l'indication de changement de position indiquant un changement de position du récepteur d'énergie (105).

15. Émetteur d'énergie (101) selon une quelconque revendication précédente, dans lequel le critère de détection de corps étrangers inclut :
une troisième exigence selon laquelle le signal provenant d'au moins un de la pluralité d'ensembles de bobines de détection équilibrées (207, 209) indique un déséquilibre entre les signaux induits dans les deux bobines de détection du au moins un de la pluralité d'ensembles de bobines de détection équilibrées (207, 209) ne dépasse pas un second seuil ; le second seuil étant supérieur au premier seuil.

16. Procédé de fonctionnement destiné à un émetteur d'énergie (101) fournissant sans fil de l'énergie à un récepteur d'énergie (105) via un signal de transfert d'énergie inductif ; l'émetteur d'énergie (101) comprenant :
une bobine émettrice (103) ;
une pluralité d'ensembles de bobines de détection équilibrées (207, 209) couplées en série, chaque ensemble de bobines de détection équilibrées (207, 209) comprenant deux bobines de détection symétriques agencées de telle sorte que les signaux induits dans les deux bobines de détection par un champ électromagnétique généré par la bobine émettrice (103) se compensent mutuellement ; le procédé comprenant
la génération d'un signal d'attaque destiné à la bobine émettrice (103) pour générer le signal de transfert d'énergie pendant au moins un intervalle de temps de transfert d'énergie d'un laps de temps répété et pour générer le signal d'attaque destiné à la bobine émettrice pour générer un signal de test électromagnétique pendant au moins un intervalle de temps de détection de corps étranger du laps de temps répété ;
un détecteur (205) de corps étranger couplé à la pluralité d'ensembles de bobines de détection équilibrées (207, 209) et effectuant une détection de corps étranger pendant l'intervalle de temps de détection de corps étranger, la détection d'un corps étranger intervenant en réponse à des signaux provenant de la pluralité d'ensembles de bobines de détection équilibrées (207, 209) satisfaisant à un critère de détection de corps étranger, le critère de détection de corps étranger incluant :
une première exigence selon laquelle un signal provenant d'au moins un de la pluralité d'ensembles de bobines de détection équilibrées (207, 209) indique un déséquilibre entre les signaux induits dans les deux bobines de détection du au moins un de la pluralité d'ensembles de bobines de détection équilibrées (207, 209) dépassant un premier seuil ; et
une deuxième exigence selon laquelle un nombre de signaux provenant de la pluralité d'ensembles de bobines de détection équilibrées (207, 209) indiquant un déséquilibre entre les signaux induits dans les deux bobines de détection de l'ensemble de bobines de détection équilibrées (207, 209) dépassant un second seuil est inférieur à un nombre seuil, le nombre seuil étant d'au moins deux.
